# EUROPÄISCHE PATENTSCHRIFT

(11) **EP 3 019 265 B1**
(45) Veröffentlichungstag und Bekanntmachung des Hinweises auf die Patenterteilung: **25.12.2019**
(21) Anmeldenummer: 14736804.7
(22) Anmeldetag: 08.07.2014
(51) Int. Cl.: B01D 27/08

(54) **SPIN-ON FILTER FÜR EINE FILTERVORRICHTUNG FÜR FLUID UND FILTERVORRICHTUNG**
SPIN-ON FILTER FOR A FILTERING DEVICE FOR FLUID AND FILTERING DEVICE
FILTRE À VISSER POUR DISPOSITIF DE FILTRATION DE FLUIDE ET DISPOSITIF DE FILTRATION

(30) Priorität: 12.07.2013 DE 102013011622
(43) Veröffentlichungstag der Anmeldung: 18.05.2016
(73) Patentinhaber: Mann+Hummel GmbH, 71636 Ludwigsburg (DE)
(72) Erfinder: JOKSCHAS, Günter, 71540 Murrhardt (DE); SANCAR, Ercan, 71679 Asperg (DE)
(86) Internationale Anmeldenummer: PCT/EP2014/064548
(87) Internationale Veröffentlichungsnummer: WO 2015/004106

(56) Entgegenhaltungen:
- WO-A1-95/11072
- DE-A1-102005 006 880
- US-A1- 2011 303 604
- US-A1- 2012 261 323

## Beschreibung

### Technisches Gebiet

Die Erfindung betrifft einen Spin-On Filter für eine Filtervorrichtung für Fluid, insbesondere Flüssigkeit, insbesondere ÖI oder Kraftstoff, insbesondere einer Brennkraftmaschine, insbesondere eines Kraftfahrzeugs.

Ferner betrifft die Erfindung eine Filtervorrichtung für Fluid, insbesondere Flüssigkeit, insbesondere ÖI oder Kraftstoff, insbesondere einer Brennkraftmaschine, insbesondere eines Kraftfahrzeugs.

Außerdem betrifft die Erfindung einen Filterkopf einer Filtervorrichtung für Fluid, insbesondere Flüssigkeit, insbesondere ÖI oder Kraftstoff, insbesondere einer Brennkraftmaschine, insbesondere eines Kraftfahrzeugs, insbesondere einer erfindungsgemäßen Filtervorrichtung.

### Stand der Technik

Aus der EP 0 830 885 A1 ist eine Filtervorrichtung mit einem Filterkopf und einer Filterpatrone bekannt. Die Filterpatrone ist an dem Filterkopf befestigt. Der Filterkopf umfasst eine Mehrzahl von nach außen gerichteten ansteigenden Vorsprüngen, welche eine erste Komponente einer bajonettartigen Verbindung bilden. Die ansteigenden Vorsprünge sind zusammenwirkend mit ähnlichen Vorsprüngen der Filterpätrone zum Befestigen der Filterpatrone an dem Filterkopf.

Aus der WO 95/11072 A1 ist ein Spin-On Filter mit einer Außendichtung bekannt, die sowohl axiale als auch radiale Dichtanteile hat. Zur Verbindung mit dem Filterkopf ist ein innenliegendes Gewinde vorgesehen, das an einer Mutternplatte des Spin-On Filters vorliegt, die mit dem Gehäusetopf formschlüssig verbunden ist. Die Außendichtung ist entweder aufgenommen in einer umlaufenden Nut auf einer Mantelfläche der Mutternplatte oder wird durch eine umlaufende Sicke des Gehäusetopfs gebildet.

US 2011 303 604 A1 betrifft einen Spin-On Filter mit innenliegendem Anschlussgewinde, das an der Mutternplatte vorliegt, bei dem über einen randständigen Bördel, der Mutternplatte und Gehäusetopf verbindet, eine umlaufende Dichtung mit einem U-förmigen Querschnitt gezogen ist, die sowohl einen axialen als auch radialen Dichtanteil hat.

US 2012 261 323 A1 betrifft einen Spin-On Filter, der ein radial innenliegendes Anschlussgewinde aufweist, das als Innen- oder Außengewinde ausgeführt sein kann. Mit dem Rand des Filtertopfs ist ein weiteres Bauteil verbördelt, das einen Axialanschlag für ein Deckelbauteil bereitstellt. Das Deckelbauteil hat Durchtrittsöffnungen für Rein- und Rohfluid, wobei auf einem äußeren Radius eine Axialdichtung vorliegt, über die die Rohseite gegenüber der Umgebung abgedichtet wird.

Schließlich betrifft DE 10 2005 006 880 A1 einen Spin-On Filter, der an seinem äußeren Umfang einen umlaufenden U-Kanal aufweist, in dem ein Teil einer Bajonettverbindung vorliegt, mit der der Spin-On mit einem korrespondierenden Teil der Bajonettverbindung an einem ringförmigen Wandabschnitt des Filterkopfs verbindbar ist. Gegenüber einer inneren Mantelfläche dieses ringförmigen Wandschnitts des Filterkopfs wird der Spin-On Filter radial abgedichtet, wobei die O-Ring-Dichtung auf eine am freien Rand des Gehäusemantels des Spin-On Filters vorliegende Anfasung aufgelegt ist.

Der Erfindung liegt die Aufgabe zugrunde, einen Spin-On Filter, eine Filtervorrichtung und einen Filterkopf der eingangs benannten Art zu gestalten, bei der/dem eine Befestigung des Wechselfilters, insbesondere Spin-On Filters, an dem Filterkopf vereinfacht werden kann. Außerdem soll eine Stabilität der Verbindung des Wechselfilters mit dem Filterkopf verbessert werden. Ferner soll die Dichtheit des Wechselfilters zur Umgebung hin verbessert werden.

### Offenbarung der Erfindung

Diese Aufgabe wird erfindungsgemäß dadurch gelöst, dass der Spin-On Filter aufweist:
- einen Gehäusetopf, in welchem ein Filterelement angeordnet ist,
- einen stirnseitig an dem Gehäusetopf angeordneten Anschlusskörper, welcher mit einer mittigen Zentralöffnung und insbesondere mit wenigstens einer gegenüber der Zentralöffnung nach radial außen versetzten Fluidöffnung versehen ist,
- ein filterseitiges Verbindungsteil einer Verbindungseinrichtung zum lösbaren Verbinden des Spin-On Filters mit einem Filterkopf der Filtervorrichtung, welches an der mittigen Zentralöffnung angeordnet ist,
und wobei das filterseitige Verbindungsteil mittels einer Steck-und/oder Drehbewegung bzgl. einer Verbindungsachse mit einem Anschlussstutzen eines kopfseitigen Verbindungsteils des Filterkopfs der Filtervorrichtung lösbar verbindbar ist, und wobei stirnseitig eine zumindest um die Zentralöffnung und die wenigstens eine Fluidöffnung umlaufende Außendichtung vorgesehen ist, die zur Anlage einer filterkopfseitigen, radial nach innen gerichteten Dichtfläche radial nach außen gerichtet ist, um bei an dem Filterkopf montierten Spin-On Filter einen zwischen dem Spin-On Filter und dem Filterkopf gebildeten Fluidraum zur Umgebung hin abzudichten.

Derartige Spin-On Filter können bekanntermaßen auch als Wechselfilter bezeichnet werden. Bei dem Spin-On Filter ist wenigstens ein Filterelement in dem Gehäusetopf des Filtergehäuses angeordnet. Der Spin-On Filter wird komplett mit dem Filtergehäuse und dem darin enthaltenen wenigstens einen Filterelement ausgetauscht. Vorteilhafterweise kann das wenigstens eine Filterelement fest in dem Filtergehäuse angeordnet sein.

Der kopfseitige Verbindungsteil kann vorteilhafterweise als Anschlussstutzen ausgelegt sein. Der kopfseitige Verbindungsteil kann alternativ auch einen Abschnitt aufweisen, welcher die Funktion und/oder Form eines Anschlussstutzens hat.

Vorteilhafterweise kann der Anschlussstutzen einen Fluidablauf aufweisen, über den das Fluid aus dem Spin-On Filter heraus strömen kann. Alternativ kann der Anschlussstutzen auch einen Fluidzulauf aufweisen sein, über den das Fluid aus dem Filterkopf in den Spin-On Filter gelangen kann. Der Anschlussstutzen kann vorteilhafterweise ein Abschnitt eines Anschlussstücks, insbesondere ein Anschlusshülsenabschnitt, des Filterkopfs sein.

Insbesondere ist der Spin-On Filter bzw. die Filtervorrichtung derart gestaltet, dass das ungefilterte Fluid an einer Stirnseite zugeführt wird und das gefilterte Fluid an derselben Stirnseite abgeführt wird.

Vor diesem Hintergrund kann die zumindest eine Fluidöffnung des Anschlusskörpers vorteilhafterweise eine Fluidzulauföffnung sein, durch die Fluid in den Spin-On Filter gelangen kann. Alternativ kann die zumindest eine Fluidöffnung eine Fluidablauföffnung sein, durch die Fluid aus dem Spin-On Filter heraus gelangen kann.

Alternativ ist es aber auch möglich, dass sowohl das Rohfluid als auch das Reinfluid über die Zentralöffnung in den Filter bzw. aus dem Filter herausströmt.

Der Anschlusskörper kann vorteilhafterweise eine Anschlussplatte sein. Vorteilhafterweise kann der Anschlusskörper ein Deckel eines Gehäuses des Spin-On Filters sein. Mit dem Deckel kann vorteilhafterweise der Gehäusetopf abgedeckt werden.

Erfindungsgemäß ist eine radial nach: außen offene Dichtungsaufnahmenut zumindest teilweise durch einen Befestigungsring des Anschlusskörpers gebildet, der mit dem Rand des Gehäusetopfs formschlüssig, insbesondere durch einen Formbördel, verbunden sein kann.

Auf diese Weise kann mit dem Befestigungsring sowohl der Anschlusskörper mit dem Gehäusetopf verbunden, als auch die Außendichtung gehalten werden. Durch die formschlüssige Verbindung, insbesondere den Formbördel, kann eine stabile Verbindung zwischen der Dichtungsaufnahmenut - und damit der Außendichtung - und dem Anschlusskörper realisiert werden. Eine radial innere Bodenfläche der Dichtungsaufnahmenut kann vorteilhafterweise als radial wirkendes Gegenlager für die Außendichtung dienen.

Bei einer weiteren vorteilhaften Ausführungsform kann die Außendichtung axial zu dem Filterkopf hin gegenüber einem umlaufenden Flächenabschnitt vorstehen, der an der dem Filterkopf zugewandten Seite des Anschlusskörpers radial nach außen auf die Außendichtung folgen kann.

Auf diese Weise kann die Außendichtung in axialer Richtung beidseitig von einer entsprechenden Dichtfläche auf Seiten des Filterkopfs überragt werden. So kann eine größere Lagetoleranz des Spin-On Filters gegenüber dem Filterkopf einfach kompensiert werden. Die Dichtfläche auf Seiten des Filterkopfs kann vorteilhafterweise an einem entsprechenden kopfseitigen Außendichtabschnitt angeordnet sein. Der Außendichtabschnitt kann die Außendichtung bei montiertem Spin-On Filter axial überragen.

Bei einer weiteren vorteilhaften Ausführungsform kann die Außendichtung unterhalb der dem Filterkopf zugewandten Seite der formschlüssigen Verbindung zwischen dem Rand des Gehäusetopfs und dem Befestigungsring, insbesondere des Formbördels, angeordnet sein.

Auf diese Weise kann die Außendichtung geschützt radial innerhalb des Randes des Gehäusetopfs angeordnet sein. Ferner kann so ein axialer Bauraum des Spin-On Filters verringert werden.

Bei einer weiteren vorteilhaften Ausführungsform kann das filterseitige Verbindungsteil mehrere Verbindungsstege aufweisen, die in Umfangsrichtung der Verbindungsachse verteilt der Zentralöffnung angeordnet sein können.

Die filterseitigen Verbindungsstege können mit entsprechenden kopfseitigen Verbindungsstegen oder Nuten, insbesondere Rampennuten, zum Verbinden des Spin-On Filters mit dem Filterkopf zusammenwirken.

Vorteilhafterweise können die Verbindungsstege bzgl. der Verbindungsachse umfangsmäßig durchgängig sein. Die Verbindungsstege können bzgl. der Verbindungsachse umfangsmäßig auch Unterbrechungen aufweisen.

Vorteilhafterweise können die Verbindungsstege an ihrer dem Filterkopf abgewandten Seite jeweils wenigstens eine zur Verbindungsachse schräg verlaufende, filterseitige Haltefläche und an ihrer dem Filterkopf zugewandten Seite jeweils wenigstens eine zur Verbindungsachse schräg verlaufende Zuführrampe aufweisen, mittels derer kopfseitige Halteflächen an dem kopfseitigen Verbindungsteil bei der Montage des Spin-On Filters an den Filterkopf den filterseitigen Halteflächen unter Drehung des Spin-On Filters zuführbar sind.

Vorteilhafterweise können die Verbindungsstege an einer radial inneren Umfangsseite des Anschlusskörpers angeordnet sein.

Vorteilhafterweise können die Verbindungsstege radial nach innen ragen. Vorteilhafterweise können die Verbindungsstege nach radial innen in die Zentralöffnung ragen.

Auf diese Weise kann eine stabile und kompakte Bauform realisiert werden. Die Verbindungstege können an einem Innenumfang der Zentralöffnung angeordnet sein.

Vorteilhafterweise können dem Filterkopf zugewandte Anfänge der Verbindungsstege bzgl. der Verbindungsachse umfangsmäßig verteilt, insbesondere gleichmäßig verteilt, angeordnet sein.

Auf diese Weise kann das Risiko einer Verkippung des Spin-On Filters beim Anbau an dem Filterkopf verringert, vorzugsweise verhindert, werden.

Vorteilhafterweise können dem Filterkopf zugewandte Anfänge der Verbindungstege zu einem kopfseitigen, die Zentralöffnung umgebenden radial inneren Rand des Anschlusskörpers bzgl. der Verbindungsachse axial beabstandet sein.

Auf diese Weise kann ein Abschnitt der radial inneren Umfangsseite des Anschlusskörpers, der die Zentralöffnung begrenzt, zwischen den entsprechenden Anfängen der Verbindungsstege und dem Rand des Anschlusskörpers als axiale Einführhilfe für den Anschlussstutzen auf der Seite des Filterkopfs wirken.

Die dem Filterkopf zugewandten Anfänge der Verbindungstege können vorteilhafterweise mit einen äxialen Versatz gegenüber dem kopfseitigen Rand der Zentralöffnung angeordnet sein.

Bei einer weiteren vorteilhaften Ausführungsform kann die Verbindungseinrichtung wenigstens eine bzgl. der Verbindungsachse umfangsmäßige Innendichtung aufweisen.

Bei einer weiteren vorteilhaften Ausführungsform kann die Innendichtung bzgl. der Verbindungsachse axial gegenüber dem filterseitigen Verbindungsteil zum Innenraum des Spin-On Filters hin Versetzt angeordnet sein.

Vorteilhafterweise kann die Dichtungsfläche der Innendichtung eine bzgl. der Verbindungsachse zumindest axiale Anlage für die Dichtfläche des kopfseitigen Fluidstutzens bilden.

Vorteilhafterweise kann die Innendichtung mit dem Filterelement verbunden sein.

Ferner wird die Aufgabe erfindungsgemäß durch die Filtervorrichtung dadurch gelöst, dass die Filtervorrichtung einen Wechselfilter, insbesondere einen erfindungsgemäßen Spin-On Filter, umfasst, der aufweist:
- einen Gehäusetopf, in welchem ein Filterelement angeordnet ist,
- eine stirnseitig an dem Gehäusetopf angeordneten Anschlusskörper, welcher mit einer mittigen Zentralöffnung und insbesondere mit wenigstens einer gegenüber der Zentralöffnung nach radial außen versetzten Fluidöffnung versehen ist,
- ein filterseitiges Verbindungsteil einer Verbindungseinrichtung zum lösbaren Verbinden des Spin-On Filters mit einem Filterkopf der Filtervorrichtung, welches an der mittigen Zentralöffnung angeordnet ist,
und wobei das filterseitige Verbindungsteil mittels einer Steck-und/oder Drehbewegung bzgl. einer Verbindungsachse mit einem Anschlussstutzen eines kopfseitigen Verbindungsteils des Filterkopfs der Filtervorrichtung lösbar verbindbar ist, und wobei stirnseitig eine zumindest um die Zentralöffnung und die wenigstens eine Fluidöffnung umlaufende Außendichtung vorgesehen ist, die zur Anlage einer filterkopfseitigen, radial nach innen gerichteten Dichtfläche radial nach außen gerichtet ist, um bei an dem Filterkopf montierten Spin-On Filter einen zwischen dem Spin-On Filter und dem Filterkopf gebildeten Fluidraum zur Umgebung hin abzudichten.

Die wenigstens eine Außendichtung kann zwischen dem Filterkopf und dem Wechselfilter wenigstens radial bzgl. der Verbindungsachse abdichten.

Vorteilhafterweise kann die wenigstens eine Außendichtung von den Verbindungsteilen getrennt sein.

Die Filtervorrichtung ist geeignet zur Filtrierung von Fluid. Insbesondere können Flüssigkeiten, insbesondere ÖI oder Kraftstoff, damit filtriert werden.

Die Filtervorrichtung kann bei Brennkraftmaschinen von Kraftfahrzeugen eingesetzt werden. Sie kann auch bei andersartigen Brennkraftmaschinen, insbesondere Industriemotoren Verwendung finden. Die Erfindung kann auch außerhalb von Brennkraftmaschinen, insbesondere in der Kraftfahrzeugtechnik, eingesetzt werden.

Die Filtervorrichtung weist einen Filterkopf auf, an dem ein Wechselfilter montiert werden kann. Der Filterkopf kann wenigstens einen Zulauf und/öder wenigstens einen Ablauf für das Fluid aufweisen. Der Filterkopf kann vorzugsweise fest an einem Rahmen fixiert sein. Der Rahmen kann insbesondere Teil der Brennkraftmaschine und/oder des Kraftfahrzeugs sein.

Der Filterkopf weist einen kopfseitigen Verbindungsteil einer Verbindungseinrichtung für den Wechselfilter auf. Vorteilhafterweise kann der Filterkopf einen ersten Verbindungsteil aufweisen.

Der Wechselfilter weist einen filterseitigen Verbindungsteil der Verbindungseinrichtung auf. Vorteilhafterweise kann der Wechselfilter einen zweiten Verbindungsteil aufweisen.

Der zweite Verbindungsteil kann mit dem ersten Verbindungsteil lösbar verbunden werden.

Die Verbindungseinrichtung ist mittels einer kombinierten Steckbewegung und Drehbewegung (Steck-und/oder Drehbewegung) bzgl. einer Verbindungsachse schließbar und lösbar sein. Kombinierte Steck-/Drehverbindungen können einfach und schnell geschlossen und geöffnet werden. Ferner sind sie robust gegenüber Zugbelastungen. Mit der erfindungsgemäßen Verbindungseinrichtung kann so einfach ein Schnellverschluss realisiert werden, der einfach und schnell geschlossen und geöffnet werden kann.

Mit der wenigstens einen Außendichtung können die fluidführenden Räume, insbesondere Räume zwischen dem Wechselfilter und dem Filterkopf, von der Umgebung dicht getrennt werden. Dabei kann sich die wenigstens eine Außendichtung auf der Rohseite oder der Reinseite des Filterelements des Wechselfilters befinden. Dies hängt von der Strömungsrichtung des Fluids durch den Wechselfilter ab.

Erfindungsgemäß ist die wenigstens eine Außendichtung von den Verbindungsteilen getrennt. Die wenigstens eine Außendichtung ist also nicht unmittelbar mit einem der Verbindungsteile verbunden. Zwischen der wenigstens einen Außendichtung und den Verbindungsteilen ist wenigstens ein weiteres mechanisches Zwischen-Bauteil, insbesondere ein Bauteil des Filterkopfs oder ein Deckelkörper des Wechselfilters, angeordnet. Die wenigstens eine Außendichtung und die Verbindungsteile sind also durch das wenigstens eine Zwischen-Bauteil getrennt. Das wenigstens eine Zwischen-Bauteil bewirkt eine mechanische Kopplung zwischen der wenigstens einen Außendichtung und wenigstens einem der Verbindungsteile. Gleichzeitig ermöglicht das wenigstens eine Zwischen-Bauteil eine Erhöhung der Gestaltungsfreiheit sowohl der Verbindungsteile als auch der wenigstens einen Außendichtung. Auf diese Weise kann eine Dichtfunktion getrennt von einer Verbindungsfunktion jeweils optimiert werden. Insbesondere können bauliche Maßnahmen zur Kompensation von mechanischen Belastungen, die auf die wenigstens eine Außendichtung und auf das wenigstens eine Zwischen-Bauteil jeweils wirken, getrennt voneinander optimiert jeweils werden:

Bei einer vorteilhaften Ausführungsform kann die wenigstens eine Außendichtung bzgl. der Verbindungsachse ausschließlich in radialer Richtung abdichten. Auf diese Weise kann eine etwaige Kompression der wenigstens einen Außendichtung im Wesentlichen unabhängig von einem Schließgrad der Verbindungseinrichtung sein. Eine mechanische Belastung auf die Außendichtung kann so verringert werden.

Bei einer weiteren vorteilhaften Ausführungsform kann die wenigstens eine Außendichtung eine O-Ring-Dichtung sein. Alternativ kann eine eckige, insbesondere flache, Dichtung verwendet werden. Eine O-Ring-Dichtung hat den Vorteil, dass sie bei einer Steckbewegung in Richtung der Verbindungsachse einfacher an den entsprechenden radial inneren und/oder radial äußeren Dichtflächen abrollen kann. Mit der O-Ring-Dichtung kann die radiale Dichtwirkung besser definiert und/oder eingestellt werden, als mit einer Flachdichtung.

Bei einer weiteren vorteilhaften Ausführungsform kann die wenigstens eine Außendichtung auf der Seite des Wechselfilters befestigt sein. Sie kann vorteilhafterweise radial innen an einer entsprechenden Fläche des Wechselfilters anliegen. Alternativ kann sie auch radial außen an einer entsprechenden Fläche des Wechselfilters anliegen.

Bei einer weiteren vorteilhaften Ausführungsform kann auf Seiten des Filterkopfs eine entsprechende Dichtfläche angeordnet sein, mit der die wenigstens eine Außendichtung dichtend zusammenwirken kann. Die Dichtfläche kann sich dabei radial außerhalb oder innerhalb der Außendichtung befinden.

Bei einer weiteren vorteilhaften Ausführungsform kann die Dichtfläche an einem entsprechenden Außendichtabschnitt auf Seiten des Filterkopfs angeordnet sein. Der Außendichtabschnitt kann vorteilhafterweise zylindrisch sein. Der Außendichtabschnitt kann vorteilhafterweise koaxial zur Verbindungsachse sein. Ein Durchmesser der Dichtfläche auf der der Außendichtung zugewandten Seite kann sich in axialer Richtung zu der Stirnseite hin, von der die Außendichtung beim Verbinden der Verbindungseinrichtung auf die Dichtfläche zu bewegt wird, aufweiten. Auf diese Weise kann ein Einführen oder Aufstecken der Außendichtung auf die Dichtfläche vereinfacht werden. Ferner kann die Außendichtung während dem Schließprozess der Verbindungseinrichtung kontinuierlich, insbesondere gleichmäßig, komprimiert werden.

Bei einer weiteren vorteilhaften Ausführungsform kann die wenigstens eine Außendichtung in einer Dichtungsaufnahme angeordnet sein. Die Dichtungsaufnahme kann sich vorteilhafterweise auf der Seite des Wechselfilters befindet. Die Dichtungsaufnahme kann vorteilhafterweise eine Dichtungsnut sein. Die Dichtungsnut kann vorteilhafterweise nach radial außen oder nach radial innen offen sein. Die Dichtungsnut kann vorteilhafterweise an einen Deckelelement des Wechselfilters angeordnet sein. Das Deckelelement kann vorteilhafterweise ringförmig sein. Vorteilhafterweise kann das Deckelelement ein Blechring sein. Die Dichtungsnut kann vorteilhafterweise durch Bördeln des Blechrings realisiert sein. Das Deckelelement kann vorteilhafterweise mit einem Gehäuseelement, insbesondere einem Gehäusetopf, des Wechselfilters, insbesondere mittels einer Bördelung, verbunden sein.

Auf der der offenen Seite der Dichtungsnut zugewandten Seite kann das Deckelelement eine Aufnahme, insbesondere Ringnut, für den Außendichtabschnitt des Filterkopfs aufweisen.

Die Außendichtung kann zusätzlich oder alternativ auch axial abdichten.

Bei einer weiteren vorteilhaften Ausführungsform kann wenigstens ein erster der Verbindungsteile wenigstens zwei bzgl. der Verbindungsachse schraubenartig verlaufende erste Rampenabschnitte aufwei-sen und der zweite Verbindungsteil kann wenigstens zwei bzgl. der Verbindungsachse schraubenartig verlaufende zweite Rampenabschnitte aufweisen, die wenigstens zum Schließen der Verbindungseinrichtung aneinander geführt sein können.

Vorteilhafterweise kann der erste Verbindungsteil wenigstens zwei bzgl. der Verbindungsachse schraubenartig Verlaufende erste, insbesondere kopfseitige, Rampenabschnitte aufweisen. Der zweite Verbindungsteil kann wenigstens zwei bzgl. der Verbindungsachse schraubenartig verlaufende zweite, insbesondere filterseitige, Rampenabschnitte aufweisen. Durch die Verwendung der schraubenartigen Rampenabschnitte kann eine bauraumoptimierte, Verbindungseinrichtung realisiert werden. Dadurch, dass jeder der Verbindungsteile wenigstens zwei jeweilige Rampenabschnitte aufweist, können bei einem Zusammenstecken der Verbindungsteile mit einer Steckbewegung in Richtung der Verbindungsachse die Rampenabschnitte der Verbindungsteile umfangsmäßig an mehreren Stellen aneinander anstoßen. Auf diese Weise können die Verbindungsteile gleichmäßig, insbesondere ohne Verkantung, aneinander gesetzt werden. Bei einer folgenden Drehbewegung um die Verbindungsachse können sich die Rampenabschnitte der Verbindungsteile gegenseitig führen. Auf diese Weise kann ein Schließprozess einfach und genau durchgeführt werden.

Die ersten Rampenabschnitte können sich vorteilhafterweise wenigstens teilumfänglich überlappen. Sie können vorteilhafterweise eine schraubenartig verlaufende erste, insbesondere kopfseitige, Rampennut auf bzgl. der Verbindungsachse axial gegenüberliegenden Seiten begrenzen. Die wenigstens eine erste Rampennut kann vorteilhafterweise ein U-förmiges Profil haben. Auf diese Weise kann sie an drei Seiten, nämlich einer radial äußeren oder inneren Seite und zwei axialen Seiten als Führung für die zweiten Rampenabschnitte dienen.

Zum Schließen der Verbindungseinrichtung kann wenigstens einer der zweiten Rampenabschnitte wenigstens teilweise in einer der ersten Rampennuten geführt sein. Mithilfe der Zusammenwirkung der Rampenabschnitte mit den Rampennuten kann eine präzise, genaue und stabile Führung in axialer, radialer und Umfangsrichtung beim Schließen der Verbindungseinrichtung erreicht werden. Innerhalb der ersten Rampennuten können die entsprechenden zweiten Rampenabschnitte auch stabil gehalten werden. So kann eine Verbindung realisiert werden, die insbesondere gegenüber Zugkräften axial zur Verbindungsachse sehr belastbar ist.

Mittels der Mehrzahl von Rampenabschnitten an jedem der Verbindungsteile können mehrere schraubenartige Gänge realisiert werden. Die Verbindungseinrichtung kann so mit verhältnismäßig kleinen Drehbewegungen geschlossen werden. Vorteilhafterweise kann die Verbindungseinrichtung mittels einer Drehbewegung um maximal 360° geschlossen werden.

Die Steigungen der schraubenartigen Rampenabschnitte können gleichmäßig, insbesondere konstant, sein. Sie können auch entlang der Rampenabschnitte variieren.

Die ersten Rampenabschnitte können gleichartig sein. Es können aber auch unterschiedliche erste Rampenabschnitte verwendet werden. Entsprechend können die zweiten Rampenabschnitte gleich oder unterschiedlich sein. Die Rampenabschnitte jeweils einer der Verbindungsteile können in gleicher bzgl. der Verbindungsachse axialer Höhe beginnen. Sie können aber auch in unterschiedlichen axialen Höhen beginnen.

Die Verbindungsteile können jeweils aus einem einzigen Material oder aus einem Materialmix hergestellt sein. Die Verbindungsteile können vorteilhafterweise aus Kunststoff, Aluminium und/oder Blech sein oder ein derartiges Material aufweisen. Die beiden Verbindungsteile können aus dem gleichen Material oder unterschiedlichen Materialien sein.

Der Wechselfilter kann vorteilhafterweise einen runden Querschnitt haben. Der Wechselfilter kann vorteilhafterweise koaxial zu einer Filterachse sein. Die Filterachse kann vorteilhafterweise mit der Verbindungsachse zusammenfallen. Der Wechselfilter kann vorteilhafterweise ein Filterelement aufweisen. Das Filterelement kann vorteilhafterweise ein umfangsmäßig geschlossenes Filtermedium aufweisen. Das Filtermedium kann vorteilhafterweise sternförmig oder zickzackförmig gefaltet sein. Das Filtermedium kann vorteilhafterweise an wenigstens einer Stirnseite mit einem Endkörper, insbesondere einer Endscheibe, dicht verbunden sein. Das Filterelement kann vorteilhafterweise koaxial zur Filterachse sein. Das Filterelement kann vorteilhafterweise einen Stützkörper aufweisen. Der Stützkörper kann vorteilhafterweise ein Mittelrohr sein. Das Mittelrohr kann sich vorteilhafterweise in einem Elementinnenraum des Filterelements befinden. Das Mittelrohr kann sich zwischen den Endkörpern erstrecken.

Vorteilhafterweise kann der filterseitige, insbesondere zweite, Verbindungsteil ein tragendes und/oder stützendes Teil des Wechselfilters, insbesondere eines Gehäuses des Wechselfilters, sein.

Vorteilhafterweise kann der filterseitige, insbesondere zweite, Verbindungsteil mit einem Deckelteil zum Verschließen des Gehäuses des Wechselfilters ausgebildet sein. Der filterseitige Verbindungsteil kann vorteilhafterweise einstückig mit dem Deckelteil verbunden sein. Auf diese Weise kann ein Aufwand an Bauteilen verringert werden. Das Deckelteil kann vorteilhafterweise wenigstens einen Durchlass, insbesondere einen Einlass und/oder einen Auslass, für das Fluid in den Wechselfilter oder aus diesem heraus aufweisen. Das Deckelteil kann vorteilhafterweise mittels eines Fixierelements an einem weiteren Gehäuseteil, insbesondere einem Filtertopf, des Wechselfilters fixiert sein. Das Fixierelement kann vorteilhafterweise einen Blechring aufweisen, welcher mit dem weiteren Gehäuseteil verbunden werden kann. Der Blechring kann vorteilhafterweise mittels einer Bördelverbindung mit dem weiteren Gehäuseteil verbunden sein.

Vorteilhafterweise kann die Verbindungseinrichtung wenigstens einen Anschlag aufweisen. Mit dem wenigstens einen Anschlag kann verhindert werden, dass die Verbindungsrichtung bei der Steck-und/oder Drehbewegung über ihre Schließposition hinweg bewegt werden kann. Auf diese Weise kann die Schließposition präzise definiert werden. Wenigstens einer der Anschläge kann sich am Ende einer der Rampennuten befinden. So kann der in der entsprechenden Rampennut geführte Rampenabschnitt mit seinem entsprechend zugewandten Ende an dem Anschlag anstoßen und so ein Weiterdrehen verhindern.

Vorteilhafterweise können beide Verbindungsteile jeweils wenigstens zwei bzgl. der Verbindungsachse schraubenartig verlaufende Rampenabschnitte aufweisen. Die Rampenabschnitte desselben Verbindungsteils können sich bzgl. der Verbindungsachse wenigstens teilumfänglich überlappen. Die Rampenabschnitte desselben Verbindungsteils können jeweils eine schraubenartig verlaufende Rampennut auf bzgl. der Verbindungsachse axial gegenüberliegenden Seiten begrenzen. Zum Schließen der Verbindungseinrichtung kann von jedem der Verbindungsteile jeweils wenigstens einer der Rampenabschnitte wenigstens teilweise in einer der Rampennuten des jeweils anderen Verbindungsteils geführt sein.

Vorteilhafterweise kann sich die Verbindungseinrichtung zwischen einer Rohseite und einer Reinseite eines Filterelements des Wechselfilters befinden. Die Verbindungseinrichtung kann so vorteilhafterweise innerhalb einer Außenabdichtung angeordnet sein, welche den fluidführenden Raum der Filtervorrichtung zur Umgebung hin abdichten kann. Eine Haltefunktion/Verbindungsfunktion der Verbindungseinrichtung und eine Dichtfunktion zwischen dem fluidführenden Raum der Filtervorrichtung und der Umgebung können so voneinander getrennt werden. So können die Haltefunktion/Verbindungsfunktion und die Dichtfunktion jeweils, insbesondere unabhängig voneinander, optimiert werden.

Vorteilhafterweise kann wenigstens einer der ersten Rampenabschnitte außerhalb der entsprechenden ersten Rampennut eine Einführrampenfläche aufweisen, welche in die entsprechende ersten Rampennut übergehen kann. Die Einführrampenfläche kann als Einführhilfe dienen, um eine genaue Einführung der jeweils zweiten Rampenabschnitte in die entsprechenden Rampennuten zu erreichen.

Wenigstens eine der Einführrampenflächen kann vorteilhafterweise bzgl. der Verbindungsachse schraubenartig verlaufen. Auf diese Weise kann eine Führung der entsprechenden zweiten Rampenabschnitte bei der Steck-Und/oder Drehbewegung zum Schließen/Öffnen der Verbindungseinrichtung verbessert werden.

Vorteilhafterweise kann die wenigstens eine Einführrampenfläche stufenlos in die entsprechende Rampennut übergehen. Auf diese Weise kann eine gleichmäßige Führung erreicht werden.

Vorteilhafterweise kann die wenigstens eine Einführrampenfläche auf der dem zweiten Verbindungsteil axial zugewandten Seite des wenigstens einen ersten Rampenabschnitts angeordnet sein.

Vorteilhafterweise können wenigstens zwei der ersten Rampenabschnitte umfangsmäßig wenigstens abschnittsweise versetzt zueinander sein. Auf diese Weise können die zweiten Rampenabschnitte beim Zusammenstecken der Verbindungsteile in jeder Drehorientierung des Wechselfilters bzgl. des Filterkopfs jeweils an einer entsprechenden Einführrampenfläche angelegt werden. So kann in jeder Drehposition des Wechselfilters relativ zum Filterkopf eine Führung der Rampenabschnitte erreicht werden.

Vorteilhafterweise kann wenigstens einer der ersten Rampenabschnitte sich bzgl. der Verbindungsachse nur über einen Teil des Umfangs erstrecken. Auf diese Weise kann die Verbindungseinrichtung mit einer Drehung des Wechselfilters um maximal 360° relativ zum Filterkopf geschlossen oder geöffnet werden. Auf diese Weise kann die Verbindungseinrichtung schnell geöffnet und geschlossen werden.

Vorteilhafterweise können wenigstens die ersten Rampenabschnitte sich jeweils über einen gleichen Umfangswinkel erstrecken. Die Verbindungseinrichtung kann so eine Symmetrie bzgl. der Verbindungsachse aufweisen. Auf diese Weise kann der Wechselfilter in mehreren Drehorientierungen am Filterkopf montiert werden. Beim Schließen der Verbindungseinrichtung kann einfacher eine Startposition gefunden werden, von der aus ein kontrollierter Verschluss der Verbindungseinrichtung möglich ist. Auf diese Weise kann der Anbau des Wechselfilters vereinfacht werden.

Vorteilhafterweise kann ein Umfangswinkel, über den sich jede der Rampennuten umfangsmäßig erstreckt, etwa einem Winkel von 360° geteilt durch die Anzahl der ersten Rampenabschnitte entsprechen. So kann die Symmetrie der Verbindungseinrichtung verbessert werden. Die Montage des Wechselfilters kann weiter vereinfacht werden. Ferner kann so die umfangsmäßige Ausdehnung der Rampennuten im Verhältnis zur Gesamtbaugröße der Verbindungseinrichtung optimiert werden. Die Verbindungseinrichtung kann so insgesamt vereinfacht werden. Ferner kann die Führung und das Halten der entsprechenden zweiten Rampenabschnitte bei dem Zusammenbau der Verbindungseinrichtung verbessert werden.

Vorteilhafterweise können jeweils drei erste, insbesondere kopfseitige, Rampenabschnitte vorgesehen sein. Vorteilhafterweise können jeweils drei zweite, insbesondere filterseitige, Rampenabschnitte vorgesehen sein. Mit drei Rampenabschnitten kann der zweite Verbindungsteil einfach und präzise angelegt, geführt und gehalten werden.

Die zweiten Rampenabschnitte können sich vorteilhafterweise jeweils über den gleichen Umfangswinkel wie die Rampennuten erstrecken. Auf diese Weise können die zweiten Rampenabschnitte jeweils vollständig in die entsprechenden Rampennuten eintauchen: Die Rampennuten können über ihre gesamte umfangsmäßige Ausdehnung mit den zweiten Rampenabschnitten eine Kraftübertragung realisieren. Auf diese Weise kann die mechanische Belastbarkeit der Verbindungseinrichtung verbessert werden.

Bei der Verwendung von drei ersten Rampenabschnitten können sich die entsprechenden Rampennuten vorteilhafterweise jeweils über einen Umfangswinkel von etwa zwischen 100° und 140°, vorzugsweise 120°, erstrecken. Die Rampennuten können so insgesamt den gesamten Umfang umgreifen. Auf diese Weise können die Verbindungsteile entlang des kompletten Umfangs verbunden werden.

Vorteilhafterweise kann ein Umfangswinkel, über den sich jede der Einführrampenflächen erstreckt, etwa einen Winkel von 360°, geteilt durch die Anzahl der ersten Rampenabschnitte entsprechen. Vorteilhafterweise können sich die zweiten Rampenabschnitte jeweils über den gleichen Umfangswinkel erstrecken, wie die Einführrampenflächen der ersten Rampenabschnitte. So können die zweiten Rampenabschnitte jeweils gleichmäßig und präzise an die entsprechenden Einführrampenflächen angelegt und dort geführt werden.

Bei der Verwendung von drei ersten Rampenabschnitten können sich vorteilhafterweise die drei zweiten Rampenabschnitte jeweils über einen Umfangswinkel von etwa zwischen 100° und 140°, vorzugsweise 120°, erstrecken.

Vorteilhafterweise können die ersten Rampenabschnitte umfangsmäßig hälftig jeweils die Einführrampenfläche und hälftig die Rampennut begrenzen. Auf diese Weise können die zweiten Rampenabschnitte an den Einführrampenflächen gleichmäßig anliegen und geführt werden. Ferner können die zweiten Rampenabschnitte in den Rampennuten etwa über ihre gesamte umfangsmäßige Erstreckung hälftig gehalten werden. So kann eine stabile, insbesondere zugstabile, Verbindung erreicht werden.

Bei einer Verbindungseinrichtung mit jeweils drei Rampenabschnitten auf der Kopfseite und auf der Filterseite kann eine sehr große Tragfläche realisiert werden. Auf diese Weise können hohe mechanische Belastungen, insbesondere Zugbelastungen, kompensiert werden.

Vorteilhafterweise können die Rampennuten sich bzgl. der Verbindungsachse umfangsmäßig aneinander anschließen. Die Rampennuten können so bzgl. der Drehbewegung zum Schließen/Öffnen der Verbindungseinrichtung hintereinander angeordnet sein. Die Rampennuten können ohne umfangsmäßige Überlappung angeordnet sein. So können die Rampennuten platzsparend an den Umfangseiten des ersten Verbindungsteils verlaufen.

Vorteilhafterweise können sich ggf. die Einführrampenflächen bzgl. der Verbindungsachse umfangsmäßig aneinander anschließen. Die Einführrampenflächen können ohne umfangsmäßige Überlappung angeordnet sein.

Bei einer weiteren vorteilhaften Ausführungsform kann die Verbindungseinrichtung wenigstens eine Verriegelungseinrichtung aufweisen mit wenigstens einem kopfseitigen Verriegelungsteil und wenigstens einem filterseitigen Verriegelungsteil, die in der Schließposition der Verbindungseinrichtung miteinander eine entriegelbare Verbindung eingehen können. Auf diese Weise kann die geschlossene Verbindungseinrichtung zumindest in ihrem Schließzustand mechanisch gesichert werden. So kann verhindert werden, dass die Verbindungseinrichtung sich unkontrolliert öffnen kann. Das Schließen und/öder Öffnen der entriegelbaren Verbindung kann vorteilhafterweise ohne den Einsatz eines separaten Werkzeuge möglich sein.

Die entriegelbare Verbindung kann vorteilhafterweise eine Rastverbindung sein. Eine Rastverbindung kann einfach geschlossen und geöffnet werden. Die Rastverbindung kann vorteilhafterweise einen mechanischen Widerstand realisieren, der zum Öffnen der entriegelbaren Verbindung überwunden werden muss. Auf diese Weise kann verhindert werden, dass sich die entriegelbare Verbindung unkontrolliert öffnet.

Die entriegelbare Verbindung, insbesondere Rastverbindung, kann beim Verriegeln vorteilhafterweise ein insbesondere akustisch und/oder taktil erfassbares Signal erzeugen. Auf diese Weise kann der Schließzustand der Verbindungseinrichtung einfach erfasst werden.

Wenigstens eines der Verriegelungsteile, insbesondere wenigstens eines der filterseitigen Verriegelungsteile, kann vorteilhafterweise einen Federarm aufweisen: Der Federarm kann vorteilhafterweise bzgl. der Verbindungsachse federnd nach radial außen und/oder radial innen gebogen werden. An einem freien Ende des Federarms kann vorteilhafterweise eine Rastnase oder eine Rastaufnahme angeordnet sein. Das wenigstens eine entsprechende andere Verriegelungsteil, insbesondere wenigstens eines der kopfseitigen Verriegelungsteile, kann vorteilhafterweise entsprechend eine Rastaufnahme oder eine Rastnase aufweisen. Die Rastaufnahme oder die Rastnase des Federarms kann in der Verriegelungsposition der entriegelbaren Verbindung vorteilhafterweise mit der Rastnase oder Rastaufnahme des anderen Verriegelungsteils verrasten.

Das wenigstens eine andere Verriegelungsteil kann vorteilhafterweise eine Führungsfläche aufweisen. Die Führungsfläche kann sich rampenartig in axialer Richtung erhöhen. Am Ende der Führungsfläche kann sich ggf. die Rastaufnahme oder Rastnase befinden. Bei der Drehbewegung zum Schließen der Verbindungseinrichtung kann der Federarm des einen Verriegelungsteils, insbesondere ggf. die Rastnase, an der Führungsfläche des anderen Verriegelungsteils geführt werden.

Der wenigstens eine Federarm kann vorteilhafterweise auf Seiten des Wechselfilters angeordnet sein. Auf diese Weise kann der Federarm gemeinsam mit dem Wechselfilter ausgetauscht werden. So können Ermüdungserscheinungen an dem beweglichen Federarm, die durch mehrmaliges Öffnen und Schließen der Verbindungseinrichtung auftreten können, vermieden werden. Das andere Verriegelungsteil kann vorteilhafterweise auf Seiten des Filterkopfs angeordnet sein.

Der Federarm des einen Verbindungsteils kann sich vorteilhafterweise entgegen einer Schließdrehrichtung des Wechselfilters relativ zum Filterköpf erstrecken.

Der Federarm kann vorteilhafterweise eine Vorspannung aufweisen, die bzgl. der Verbindungsachse nach radial innen :gerichtet ist. Das andere Verriegelungsteil kann vorteilhafterweise an einer bzgl. der Verbindungsachse radial äußeren Umfangsseite des entsprechenden Verbindungsteils angeordnet sein.

Die entriegelbare Verbindung kann sich vorteilhafterweise außerhalb eines Innenraums des Wechselfilters befinden. Sie kann sich vorteilhafterweise an der Außenseite eines Deckelkörpers, insbesondere Filterdeckels, des Wechselfilters befinden. Sie kann bei dem vom Filterkopf getrennten Wechselfilter von außen sichtbar sein. So kann vor der Montage des Wechselfilters erkannt werden, ob das wenigstens eine filterseitige Verriegelungsteil, insbesondere der Federarm, funktionsfähig, insbesondere unbeschädigt, ist. Das wenigstens eine filterseitige Verriegelungsteil, insbesondere der wenigstens eine Federarm, kann vorteilhafterweise den Deckelkörper in axialer Richtung überragen. Das filterseitige Verriegelungsteil kann sich vorteilhafterweise in umfangsmäßiger Verlängerung von umfangsmäßig verlaufenden Stegen befinden. Auf diese Weise kann das filterseitige Verriegelungsteil geschützt werden.

Bei einer weiteren vorteilhaften Ausführungsform kann die Verbindungseinrichtung wenigstens eine bzgl. der Verbindungsachse umfangsmäßige Innendichtung aufweisen, welche zwischen dem Filterkopf und dem Wechselfilter wenigstens axial bzgl. der Verbindungsachse abdichten und eine Rohseite des Wechselfilters von einer Reinseite trennen kann. Die Innendichtung kann vorteilhafterweise eine Ringdichtung sein. Sie kann dabei ein rundes oder eckiges, insbesondere rechteckiges, Profil aufweisen. Das Profil kann flach sein.

Die Innendichtung kann vorteilhafterweise zu einer axialen Verspannung der Verbindungseinrichtung beitragen. Auf diese Weise können Vibrationen zwischen dem Wechselfilter und dem Filterkopf gedämpft werden. Eine etwaige Geräuschentwicklung, insbesondere ein Klappern, kann so verringert werden.

Die Innendichtung kann vorteilhafterweise koaxial zur Verbindungsachse angeordnet sein. Die axiale Dichtwirkung kann beim Schließen der Verbindungseinrichtung durch eine entsprechende Verpressung axial zur Verbindungsachse verbessert werden.

Die Innendichtung kann darüber hinaus auch als Aufdrehschutz wirken. Nach dem Verpressen der Innendichtung kann aufgrund der Reibung ein Drehen des Wechselfilters relativ zum Filterkopf entgegen der Schließdrehrichtung erschwert werden. So kann die Wahrscheinlichkeit verringert werden, dass sich die Verbindungseinrichtung unkontrolliert öffnet.

Die Innendichtung kann vorteilhafterweise mit dem Wechselfilter verbunden sein. Sie kann vorteilhafterweise am Wechselfilter befestigt sein. Sie kann vorteilhafterweise in einer entsprechenden Dichtungsnut am Wechselfilter angeordnet sein. Auf diese Weise kann sie einfach verliersicher vormontiert werden.

Vorteilhafterweise kann die Innendichtung an einem Endkörper eines Filterelements, insbesondere eines Rundfilterelements, des Wechselfilters angeordnet sein. Sie kann vorteilhafterweise eine Durchlassöffnung zu einem Elementinnenraum des Filterelements umgeben. Der Elementinnenraum kann sich auf der Reinseite oder der Rohseite des Filterelements befinden. Entsprechend kann die Rohseite oder die Reinseite sich an der Außenseite des Filterelements befinden.

Die Durchlassöffnung kann vorteilhafterweise koaxial zur Verbindungsachse sein. Sie kann vorteilhafterweise mit einem Verbindungskanal verbunden sein. Der Verbindungskanal kann sich vorteilhafterweise wenigstens abschnittsweise koaxial zur Verbindungsachse erstrecken. Der Verbindungskanal kann Teil des Filterkopfs und/oder des kopfseitigen Verbindungsteils sein. Der Verbindungskanal kann vorteilhafterweise mit dem wenigstens einem Zulauf oder dem wenigstens einen Ablauf für das Fluid verbunden sein. Dies hängt davon ab, ob das Filterelement von radial außen nach radial innen oder umgekehrt durchströmbar ist.

Auf der Seite des Filterkopfs kann vorteilhafterweise eine Dichtfläche für die Innendichtung angeordnet sein. Die Dichtfläche kann vorteilhafterweise koaxial zur Verbindungsachse sein. An der Dichtfläche kann die Innendichtung flächig und umfangsmäßig geschlossen anliegen. Die Dichtfläche kann vorteilhafterweise den Verbindungskanal umgeben.

Die Innendichtung kann vorteilhafterweise koaxial zu einem etwaigen Mittelrohr des Wechselfilters sein. Auf diese Weise kann sich die Innendichtung stabil in axialer Richtung gegen das Mittelrohr abstützen.

Bei einer weiteren vorteilhaften Ausführungsform kann ein Verlauf von Rampenabschnitten der Verbindungsteile so an eine Anordnung der wenigstens einen Außendichtung angepasst sein, dass die wenigstens eine Außendichtung beim Schließen der Verbindungseinrichtung mittels einer Steck-und/oder Drehbewegung während einer frühen Schließphase, insbesondere in der sich zweite Rampenabschnitte eines zweiten Verbindungsteils in einem jeweiligen Anfangsbereich von Rampennuten von ersten Rampenabschnitten des ersten Verbindungsteils befinden, sich axial außerhalb eines von zwei Dichtabschnitten, insbesondere eines zylindrischen Außendichtabschnitts, befindet, zwischen denen sie in der Schließposition der Verbindungseinrichtung in radialer Richtung abdichtet, und während einer späteren Schließphase, in der die zweiten Rampenabschnitte insbesondere in einem jeweiligen Endbereich der Rampennuten eingreifen, zwischen den beiden Dichtabschnitten verpresst ist. Auf diese Weise kann die Außendichtung in der Schließphase, in der sich die Rampenabschnitte außerhalb oder in dem Anfangsbereich der Rampennuten befinden, entlastet sein. Eine Belastung, insbesondere Kompression, der Außendichtung erfolgt erst in der späteren Schließphase, in der die Rampenabschnitte in die jeweiligen Rampennuten, insbesondere in deren Endbereiche, eingreifen. Auf diese Weise kann eine umfangsmäßige Bewegung, insbesondere ein Reiben der Außendichtung, zwischen den Dichtabschnitten, insbesondere dem kopfseitigen Außendichtabschnitt und der filterseitigen Dichtungsnut, minimiert werden. Die mechanische Belastung der Außendichtung, insbesondere der Verschleiß, kann so verringert werden. Vorteilhafterweise können die Steigungen und/oder die entsprechenden umfangsmäßigen Ausdehnungen der Rampennuten und/ oder ggf. der Einführrampenflächen an die Anordnung, insbesondere Position, der Außendichtung angepasst sein.

Vorteilhafterweise kann die frühere Schließphase mit dem Eintritt der zweiten Rampenabschnitte in die Rampennuten erfolgen. Ein erster Drehwinkel bei der Drehung des Wechselfilters relativ zum Filterkopf zwischen dem Eintritt der zweiten Rampenabschnitte in die Rampennuten und dem Übergang von der frühen Schließphase zur späten Schließphase kann vorteilhafterweise etwa einem zweiten Drehwinkel zwischen dem Übergang der früheren Schließphase zur späteren Schließphase und dem Abschluss der späteren Schließphase entsprechen.

Bei der Verwendung von drei Rampenabschnitten kann vorteilhafterweise die Kompression der Außendichtung nach dem Eintritt der zweiten Rampenabschnitte in die Rampennuten nach einer Drehung des Wechselfilters um etwa 60° beginnen. Nach dem Drehen des Wechselfilters um weitere 60° kann die Außendichtung vollständig verpresst werden.

Die Aufgabe wird außerdem durch den Filterkopf erfindungsgemäß dadurch gelöst, dass der Filterkopf einen kopfseitigen Verbindungsteil einer mittels einer Steck-und/oder Drehbewegung bzgl. einer Verbindungsachse schließbaren und lösbaren Verbindungseinrichtung für einen Wechselfilter, insbesondere einen erfindungsgemäßen Spin-On Filter, aufweist, und wobei eine filterkopfseitige, radial nach innen gerichtete Dichtfläche vorgesehen ist zur Anlage einer an einem filterseitigen Verbindungsteil stirnseitig angeordneten, zumindest um eine Zentralöffnung und wenigstens eine Fluidöffnung eines Anschlusskörpers des Wechselfilters umlaufende Außendichtung, die radial nach außen gerichtet ist, um bei an dem Filterkopf montierten Wechselfilter einen zwischen dem Wechselfilter und dem Filterkopf gebildeten Fluidraum zur Umgebung hin abzudichten.

Die oben im Zusammenhang mit dem erfindungsgemäßen Spin-On Filter und der erfindungsgemäßen Filtervorrichtung und deren vorteilhaften Ausgestaltung aufgezeigten Vorteile und Merkmale gelten für den erfindungsgemäßen Filterkopf und dessen vorteilhafte Ausgestaltungen entsprechend und umgekehrt.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: einen Längsschnitt eines Filtersystems für Motoröl einer Brennkraftmaschine eines Kraftfahrzeugs mit einem Filterkopf, an dem ein Wechselfilter mittels einer lösbaren Verbindungseinrichtung befestigt ist;
- Figur 2: eine Detailansicht eines anderen Längsschnitts des Filtersystems aus der Figur 1 im Bereich der Verbindungseinrichtung;
- Figur 3: eine isometrische Darstellung des Filterkopfs aus den Figuren 1 und 2 ohne den Wechselfilter, mit Blick auf die Verbindungsseite;
- Figur 4: eine Draufsicht auf die Verbindungsseite des Filterkopfs aus den Figuren 1 bis 3, ohne Wechselfilter;
- Figur 5: eine isometrische Darstellung des Wechselfilters aus den Figuren 1 und 2, mit Blick auf die Verbindungsseite;
- Figur 6: eine Draufsicht auf die Verbindungsseite des Wechselfilters aus den Figuren 1, 2 und 5.

In den Figuren sind gleiche Bauteile mit gleichen Bezugszeichen versehen.

### Ausführungsform(en) der Erfindung

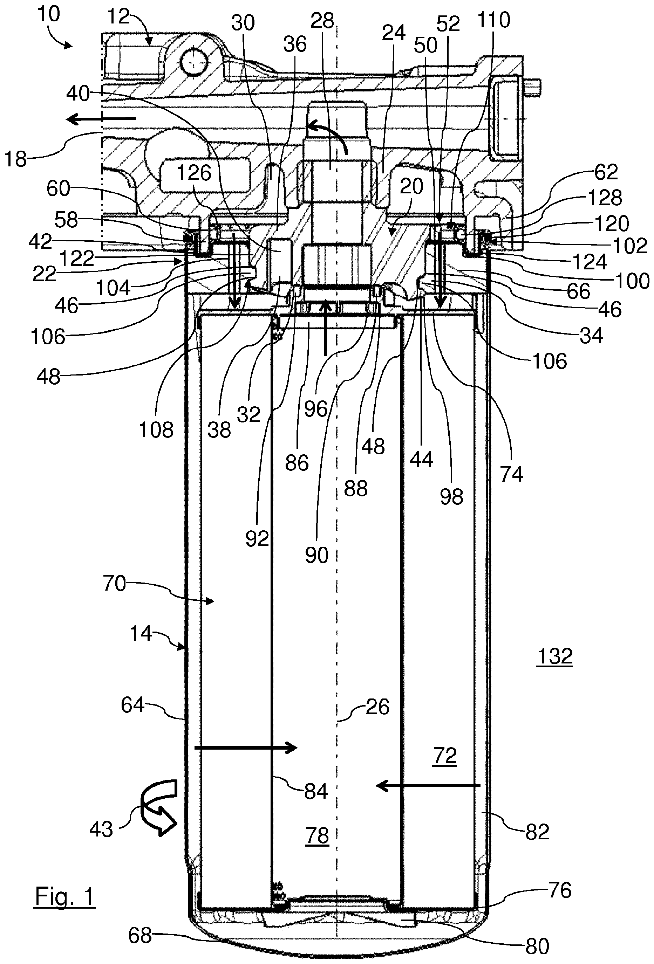

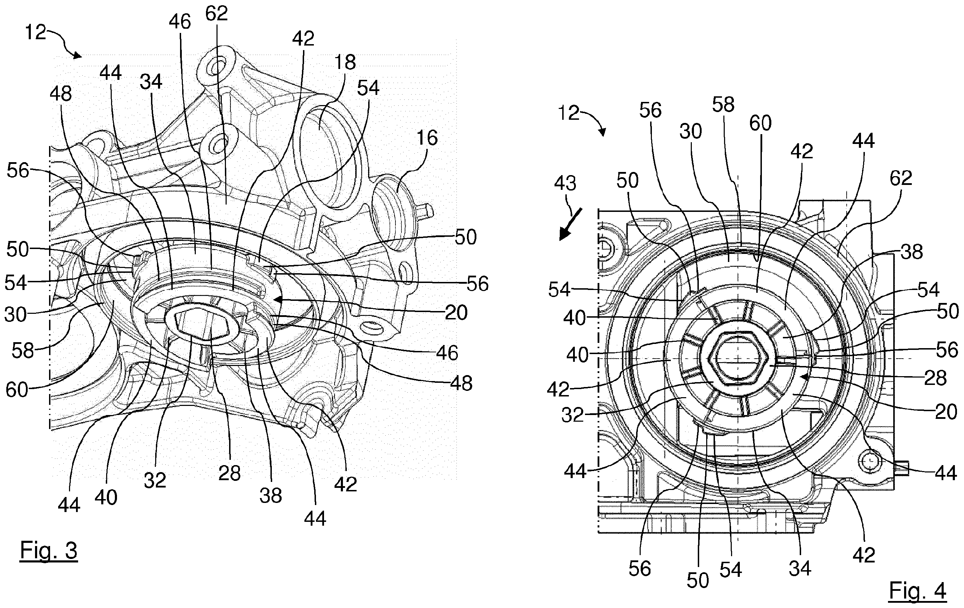

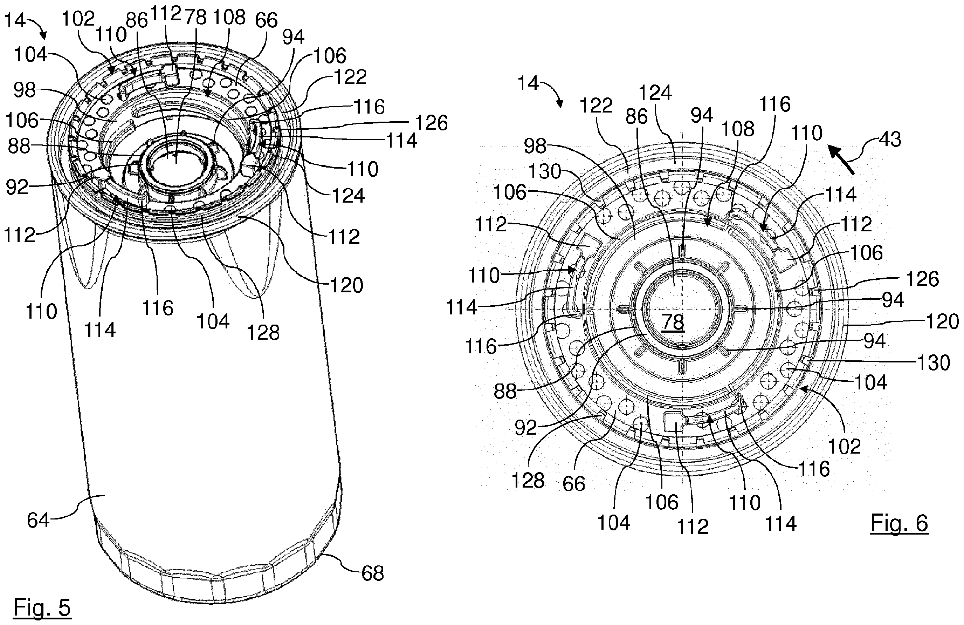

In den Figuren 1 bis 6 ist ein Filtersystem 10 für Motoröl einer Brennkraftmaschine eines Kraftfahrzeugs in unterschiedlichen Perspektiven, Schnitten und Detailansichten gezeigt.

Das Filtersystem 10 umfasst einen Filterkopf 12, an dem ein Wechselfilter 14 lösbar befestigt ist. Der Filterkopf 12 ist aus Metall. Der Filterkopf 12 ist fest mit der Brennkraftmaschine verbunden und dient als Anschlussteil für den Wechselfilter 14. Der Filterkopf 12 umfasst einen Einlass 16 und einen Auslass 18 für das Motoröl. Der Einlass 16 und der Auslass 18 sind mit hier nicht weiter interessierender Weise mit entsprechenden Ölleitungen der Brennkraftmaschine verbunden.

Ferner verfügt der Filterkopf 12 über einen kopfseitigen Verbindungsteil 20 einer insgesamt mit 22 bezeichneten, lösbaren Verbindungseinrichtung zum Verbinden des Wechselfilters 14 mit dem Filterkopf 12. Der kopfseitige Verbindungsteil 20 ist aus Metall. Die dem Wechselfilter 14 zugewandte Seite des kopfseitigen Verbindungsteils 20 hat die Form und Funktion eines Anschlussstutzens. Der kopfseitige Verbindungsteil 20 ist in einen hohlen Anschlusszylinder 24 geschraubt, welcher einstückig mit dem Filterkopf 12 verbunden ist. Der Anschlusszylinder 24 weist ein Innengewinde auf. Der Anschlusszylinder 24 ist koaxial zu einer Filterachse 26. Der kopfseitige Verbindungsteil 20 kann statt als separates Bauteil an den Filterkopf 12 geschraubt auch einstückig mit diesem verbunden sein.

Wenn im Folgenden von "axial", "radial", "koaxial" oder "umfangsmäßig" die Rede ist, so bezieht sich dies, sofern nicht anders erwähnt, auf die Filterachse 26.

Der kopfseitige Verbindungsteil 20 weist einen zylindrischen Anschlusshülsenabschnitt 28 mit einem zu dem Innengewinde des Anschlusszylinders 24 passenden Außengewinde auf. Bei angebautem Wechselfilter 14 ist der Anschlusshülsenabschnitt 28 ebenfalls koaxial zur Filterachse 26.

Ein Innenraum des Anschlusshülsenabschnitts 28 ist mit dem Auslass 18 des Filterkopfs 12 verbunden. An seiner radial inneren Umfangsseite ist der Anschlusshülsenabschnitt 28 einfach abgestuft. Der Innenquerschnitt des Anschlusshülsenabschnitts 28 auf der erweiterten, dem Wechselfilter 14 zugewandten Seite, ist etwa sechseckig, wobei die Ecken leicht abgerundet sind. Der Innenquerschnitt eines gedachten Inkreises auf der Seite des Auslasses 18 ist kleiner als der Innenquerschnitt des Anschlusshülsenabschnitts 28 auf der dem Wechselfilter 14 zugewandten Seite.

Der Anschlusszylinder 24 ist radial außen von einem Einlassringraum 30 des Filterkopfs 12 umgeben.

Eine dem Wechselfilter 14 zugewandte Stirnseite des Anschlusshülsenabschnitts 28 bildet eine ringförmige koaxiale Dichtfläche 32.

Der Anschlusshülsenabschnitt 28 des kopfseitigen Verbindungsteils 20 ist radial außen von einem Außenzylinderabschnitt 34 umgeben. Die Umfangswand des Außenzylinderabschnitts 34 hat etwa die Form eines hohlen Kreiszylinders. Der Außenzylinderabschnitt 34 ist koaxial zur Filterachse 26. Er erstreckt sich in axialer Richtung etwa von der axialen Mittelebene des Anschlusshülsenabschnitts 28 in Richtung auf die dem Wechselfilter 14 zugewandte Stirnseite des Anschlusshülsenabschnitts 28 zu. Auf seiner dem Filterkopf 12 zugewandten Seite ist der Außenzylinderabschnitt 34 über einen radialen Ringscheibenabschnitt 36 einstückig mit der radial äußeren Umfangsseite des Anschlusshülsenabschnitts 28 verbunden.

In einem Ringraum 38 zwischen der radial inneren Umfangsseite des Außenzylinderabschnitts 34 und der radial äußeren Umfangsseite des Anschlusshülsenabschnitts 28 ist eine Mehrzahl von Radialverbindungswänden 40 angeordnet. Die Radialverbindungswände 40 sind jeweils einstückig radial außen mit dem Außenzylinderabschnitt 34, radial innen mit dem Anschlusshülsenabschnitt 28 und mit einer Unterseite des radialen Ringscheibenabschnittes 36 verbunden. Die Radialverbindungswände 40 erstrecken sich jeweils radial und axial. Sie sind in Richtung der Filterachse 26 betrachtet etwa sternförmig angeordnet.

An der radial äußeren Umfangsseite des Außenzylinderabschnitts 34 sind insgesamt drei kopfseitige Rampenabschnitte 42 angeordnet. Die kopfseitigen Rampenabschnitte 42 sind bzgl. ihrer Ausdehnungen und Form identisch. Die kopfseitigen Rampenabschnitte 42 verlaufen jeweils bzgl. der Filterachse 26 schraubenartig. Eine Steigungsrichtung der kopfseitigen Rampenabschnitte 42 entspricht einem bekannten Rechtsgewinde.

Eine Schließdrehrichtung 43 des Wechselfilters 14 relativ zum Filterkopf 12, welche in den Figuren 1, 2, 4 und 6 durch einen Pfeil angedeutet ist, zum Schließen der Verbindungseinrichtung 22 entspricht der eines bekannten Rechtsgewindes. Die Schließdrehrichtung 43 verläuft vom Wechselfilter 14 auf den Filterkopf 12 in axialer Richtung betrachtet im Uhrzeigersinn.

Die kopfseitigen Rampenabschnitte 42 erstrecken sich jeweils etwa über einen Umfangswinkel von 240°. Die kopfseitigen Rampenabschnitte 42 sind zueinander versetzt angeordnet. Jeweils zwei der kopfseitigen Rampenabschnitte 42 überlappen sich jeweils über die Hälfte ihrer umfangsmäßigen Ausdehnungen. Die Anfänge der kopfseitigen Rampenabschnitte 42 befinden sich jeweils auf der dem Wechselfilter 14 zugewandten freien Stirnseite des Außenzylinderabschnitts 34. Die Enden der kopfseitigen Rampenabschnitte 42 sind umfangsmäßig jeweils dort, wo der entgegen der Schließdrehrichtung 43 betrachtet übernächste kopfseitige Rampenabschnitt 42 beginnt.

Jeder kopfseitige Rampenabschnitt 42 besteht umfangsmäßig betrachtet aus zwei Bereichen. Ein erster Bereich mit einer jeweiligen Einführrampenfläche 44 erstreckt sich umfangsmäßig vom Anfang eines jeweiligen kopfseitigen Rampenabschnitts 42 bis zum Anfang des entgegen der Schließdrehrichtung 43 betrachtet jeweils nächsten kopfseitigen Rampenabschnitts 42. Die Einführrampenflächen 44 sind von dem Wechselfilter 14 aus betrachtet in axialer Richtung frei zugänglich. Sie erstrecken sich jeweils in radialer Richtung und schraubenartig in Umfangsrichtung. Die Einführrampenflächen 44 erstrecken sich jeweils in radialer Richtung über die gesamte radiale Wanddicke des Außenzylinderabschnitts 34.

An die jeweilige Einführrampenfläche 44 schließt sich jeweils ein Bereich mit einer Nutrampenfläche 46 an. Die umfangsmäßige Erstreckung der Einführrampenfläche 44 entspricht der umfangsmäßigen Erstreckung der Nutrampenflächen 46. Sie erstrecken sich jeweils über einen Umfangswinkel von 120°. Die Nutrampenflächen 46 befinden sich radial außen an dem Außenzylinderabschnitt 34. Die Bereiche mit dem Nutrampenflächen 46 überlappen jeweils mit den entgegen der Schließdrehrichtung 43 betrachtet folgenden kopfseitigen Rampenabschnitten 42. Dabei überlappt sich jeweils die Nutrampenfläche 46 des in Schließdrehrichtung 43 betrachtet vorderen kopfseitigen Rampenabschnitts 42 mit der Einführrampenfläche 44 des folgenden kopfseitigen Rampenabschnitts 42. Die Nutrampenflächen 46 erstrecken sich in radialer Richtung etwa über die halbe radiale Wanddicke des Außenzylinderabschnitts 34. Die Einführrampenflächen 44 gehen stufenlos in die Nutrampenflächen 46 über. Die Nutrampenflächen 46 haben die gleiche Steigung wie die Einführrampenflächen 44. Die Nutrampenflächen 46 beginnen jeweils in Umfangsrichtung auf Höhe des Anfangs des jeweils im Uhrzeigersinn nachfolgenden kopfseitigen Rampenabschnitts 42. Die Nutrampenflächen 46 enden auf Höhe des Anfangs des umfangsmäßig jeweils übernächsten kopfseitigen Rampenabschnitts 42.

Die Nutrampenflächen 46 begrenzen eine jeweilige Rampennut 48 auf einer axialen Seite. Auf der axial gegenüberliegenden Seite werden die Rampennuten 48 jeweils durch eine der Einführrampenfläche 42 axial gegenüberliegende kopfseitige Haltefläche 49 des entsprechenden Bereichs der nachfolgenden kopfseitigen Rampenabschnitts 42 begrenzt. Die Rampennuten 48 haben eine in Umfangsrichtung konstante axiale Ausdehnung. Ihre radiale Ausdehnung ist in Umfangsrichtung betrachtet ebenfalls konstant.

An die radial äußere Umfangsseite des Außenzylinderabschnitts 34 sind drei Rastelemente 50 einer insgesamt mit 52 bezeichneten Verriegelungseinrichtung der Verbindungseinrichtung 22 angeordnet. Die Rastelemente 50 sind jeweils einstückig mit dem Außenzylinderabschnitt 34 verbunden. Die Rastelemente 50 sind radiale Erhebungen. Die Rastelemente 50 sind in axialer Richtung etwa auf Höhe des radialen Ringscheibenabschnitts 36 angeordnet.

Die Rastelemente 50 sind jeweils etwa keilartig. In einem bzgl. der Schließdrehrichtung 43 der Verbindungseinrichtung 22 hinteren Bereich weist jedes Rastelement 50 eine ansteigende Führungsfläche 54 auf. Die Führungsfläche 54 befindet sich an der radial äußeren Umfangsseite der Rastelemente 50. Am Ende der Führungsfläche 54 schließt sich jeweils eine Rastvertiefung 56 an. Die radiale Ausdehnung der Rastelemente 50 im Bereich der Rastvertiefung 54 ist kleiner als im Bereich des in radialer Richtung erhöhten Endes der Führungsfläche 54. Jedes Rastelement 50 erstreckt sich umfangsmäßig über einen Umfangswinkel von etwa 25° bis 30°. Der Übergang von der Führungsfläche 54 zur entsprechenden Rastvertiefung 56 befindet sich umfangsmäßig betrachtet etwa auf einer Höhe mit dem Ende eines der kopfseitigen Rampenabschnitte 42 und dem Anfang des entsprechend entgegen der Schließdrehrichtung 43 betrachtet übernächsten kopfseitigen Rampenabschnitts 42.

Der Anschlusszylinder 24 und der kopfseitige Verbindungsteil 20 sind von einem koaxialen kreiszylindrischen Außendichtabschnitt 58 umgeben. Die freie Stirnseite des Außendichtabschnitts 58 ist dem Wechselfilter 14 zugewandt. Sein Innenquerschnitt vergrößert sich zu seiner freien Stirnseite hin. Die radial innere Umfangsseite des Außendichtabschnitts 58 bildet eine Außendichtfläche 60.

Ferner weist der Filtertopf 12 einen Außenkragen 62 auf, der sich abschnittsweise koaxial zur Filterachse 26 erstreckt und den Außendichtabschnitt 58 radial außen teilumfänglich umgibt.

Der Wechselfilter 14 ist als Spin-On Filter mit einem runden Querschnitt ausgelegt. Er ist im Wesentlichen koaxial zur Filterachse 26. Der Wechselfilter 14 weist einen Filtertopf 64 auf, in dessen offener Seite ein Filterdeckel 66 befestigt ist. Der Filtertopf 64 hat einen nach außen gewölbten Filterboden 68.

In dem Filtertopf 64 ist ein koaxiales Filterelement 70 angeordnet. Das Filterelement 70 verfügt über ein zickzackförmig gefaltetes, umfangsmäßig geschlossenes Filtermedium 72. An seinen Stirnseiten ist das Filtermedium 72 jeweils dicht mit einer Anschlussendscheibe 74, in Figur 1 oben, und einer Gegenendscheibe 76, unten, verbunden.

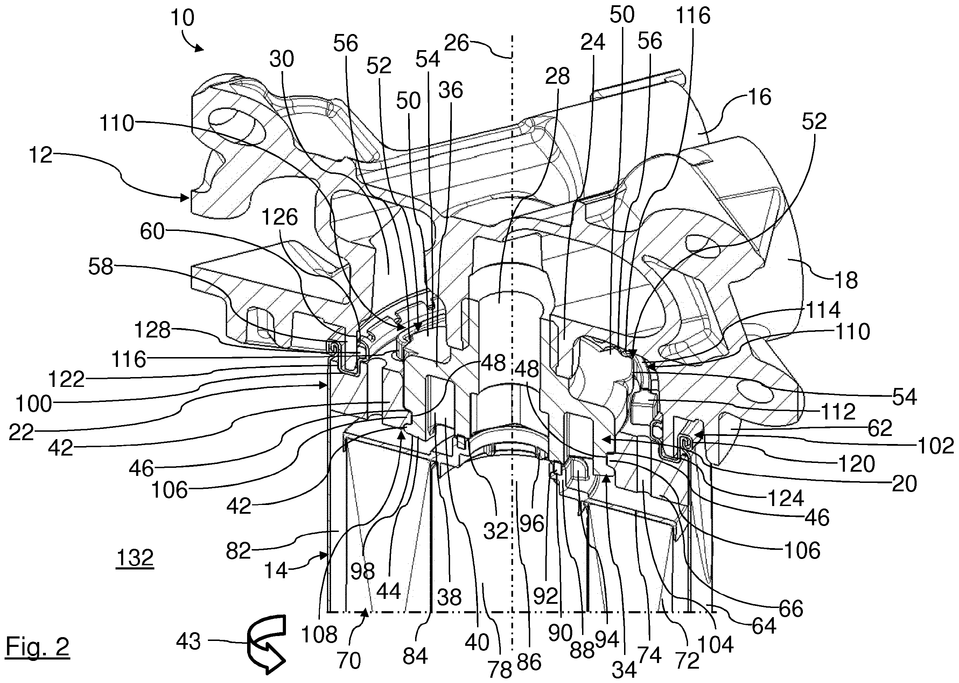

Die Anschlussendscheibe 74 ist im Detail in den Figuren 2, 5 und 6 gezeigt. Sie befindet sich auf der dem Filterdeckel 66 zugewandten Seite des Filterelements 70. Das Filtermedium 72 umgibt einen Elementinnenraum 78 des Filterelements 70. Der Elementinnenraum 78 befindet sich auf einer Reinseite des Filterelements 70.

Die Gegenendscheibe 76 verschließt den Elementinnenraum 78 auf der dem Filterboden 68 zugewandten Stirnseite des Filterelements 70. An der dem Filterboden 78 zugewandte Außenseite der Gegenendscheibe 76 stützen sich mehrere Federelemente 80 ab, die sich andererseits am Federboden 68 abstützen.

Das Filterelement 70 ist radial außen von einem rohseitigen Ringraum 82 umgeben, der von der radial inneren Umfangsseite des Filtertopfs 64 begrenzt wird.

Im Elementinnenraum 78 erstreckt sich ein koaxiales Mittelrohr 84 zwischen der Gegenendscheibe 76 und der Anschlussendscheibe 74. Eine Umfangswand des Mittelrohrs 84 ist für das Motoröl durchlässig. Eine radial innere Umfangsseite, nämlich radial innere Faltkanten, des Filtermediums 72 stützt sich an der radial äußeren Umfangsseite des Mittelrohrs 84 ab.

Die Anschlussendscheibe 74 weist eine koaxiale Auslassöffnung 86 für das filtrierte Motoröl auf. Die Auslassöffnung 86 bildet einen mittigen Ölablaufkanal. An der axial äußeren Seite der Anschlussendscheibe 74 ist einstückig ein koaxialer Dichtungsaufnahmezylinder 88 angeordnet. Eine radial innere Umfangsseite des Dichtungsaufnahmezylinders 88 ist abgestuft. Auf seiner dem Elementinnenraum 78 abgewandten Stirnseite weist der Dichtungsaufnahmezylinder 88 eine koaxiale Dichtungsnut 90 mit einer ringförmigen Innendichtung 92 auf. Die Innendichtung 92 ist bzgl. der Filterachse 26 axial gegenüber dem filterseitigen Verbindungsteil 108 zum Innenraum des Wechselfilters 14 hin versetzt angeordnet. Die Innendichtung 92 ist als Flachdichtung ausgelegt. Die Innendichtung 92 weist eine um die Auslassöffnung 86 umlaufende Dichtungsfläche 93 auf. Bei montiertem Wechselfilter 14 liegt die Innendichtung 92 mit ihrer dem Elementinnenraum 78 abgewandten Seite dicht an der Dichtfläche 32 des Anschlusshülsenabschnitts 28 des kopfseitigen Verbindungsteils 20 an. Die Innendichtung 92 wirkt in axialer Richtung. Die Innendichtung 92 trennt eine Rohseite des Filterelements 70, radial außerhalb des Dichtungsaufnahmezylinders 88, dicht von einer Reinseite, radial innerhalb des Dichtungsaufnahmezylinders 88. Der kleinste Innenradius des Dichtungsaufnahmezylinders 88 entspricht etwa dem Innenradius eines gedachten Inkreises des Anschlusshülsenabschnitts 28 auf seiner querschnittserweiterten Seite.

Radial außen ist der Dichtungsaufnahmezylinder 88 mit Stützelementen 94 gegen den sich radial erstreckenden Abschnitt der Anschlussendscheibe 74 abgestützt. Die Stützelemente 94 erstrecken sich jeweils radial und axial. An der radial inneren Umfangsseite des Dichtungsaufnahmeabschnitts 88 sind ferner innere Stützelemente 96 vorgesehen, welche einen Ringabschnitt des Dichtungsaufnahmezylinders 88, der die Dichtungsnut 90 radial innen umgibt, abstützt.

Der Filterdeckel 66 hat die Form eines Rings mit einem etwa rechteckigen Profil. Der Filterdeckel 66 ist aus Metall. Der Filterdeckel 66 hat die Funktion einer Anschlussplatte zum Verbinden des Wechselfilters 14 mit dem Filterkopf 12. Der Filterdeckel 66 weist eine zur Filterachse 26 koaxiale Aufnahmeöffnung 98 auf zur Aufnahme des Außenzylinderabschnitts 34 des kopfseitigen Verbindungsteils 20. Innerhalb des radial äußeren Randes des Filterdeckels 66 ist an der dem Filterboden 68 abgewandten Außenseite eine koaxiale Ringnut 100 angeordnet zur Aufnahme eines Deckelblechrings 102. Radial zwischen der Ringnut 100 und der Aufnahmeöffnung 98 ist eine Vielzahl von durchgängigen Einlasskanälen 104 angeordnet. Die Einlasskanäle 104 erstrecken sich jeweils parallel zur Filterachse 46. Sie verbinden den Einlassringraum 30 des Filterkopfs 12 mit dem Innenraum des Filtertopfs 64, respektive dem rohseitigen Ringraum 82.

An der radial inneren Umfangsseite des Filterdeckels 66 sind drei filterseitige Rampenabschnitte 106 angeordnet. Die Rampenabschnitte 106 realisieren jeweils Verbindungsstege. Die filterseitigen Rampenabschnitte 106 erstrecken sich jeweils von der radial inneren Umfangsseite des Filterdeckels 66 nach radial innen. Die filterseitigen Rampenabschnitte 106 sind in ihrer Ausdehnung und ihrem umfangsmäßigen Verlauf im Wesentlichen identisch. Die dem Innenraum des Filtertopfs 64 zugewandten Seiten der filterseitigen Rampenabschnitte 106 bilden jeweils filterseitige Halteflächen 107. Die dem Innenraum des Filtertopfs 64 abgewandten Seiten der filterseitigen Rampenabschnitte 106 bilden jeweils filterseitige Zuführrampen 109. Die filterseitigen Halteflächen 107 und die Zuführrampen 109 verlaufen etwa parallel zueinander. Die filterseitigen Rampenabschnitte 106 erstrecken sich jeweils, analog zu den kopfseitigen Rampenabschnitte 42, schraubenartig bzgl. der Filterachse 26. Ihre Steigungen entsprechen denen der kopfseitigen Rampenabschnitte 42. Die filterseitigen Rampenabschnitte 106 erstrecken sich jeweils bzgl. der Filterachse 26 über einen Umfangswinkel von 120°. Die filterseitigen Rampenabschnitte 106 überlappen sich nicht. Die Anfänge 111 der filterseitigen Rampenabschnitts 106 befinden sich auf der dem Innenraum des Filtertopfs 64 abgewandten axialen Seite. Die Anfänge 111 sind bei montiertem Wechselfilter 14 dem Filterkopf 12 zugewandt. Die Anfänge 111 sind zu einem dem Elementinnenraum 78 abgewandten, kopfseitigen, die Auslassöffnung 86 umgebenden: radial inneren Rand des Filterdeckels 66 beabstandet. Umfangsmäßig betrachtet befindet sich der Anfang 111 jedes filterseitigen Rampenabschnitts 106 auf einer Höhe mit dem Ende des in Schließdrehrichtung 43 vorhergehenden filterseitigen Rampenabschnitts 106. Die axialen Höhen der filterseitigen Rampenabschnitte 106 sind umfangsmäßig konstant. Sie entsprechen den axialen Höhen der Rampennuten 48 der kopfseitigen Rampenabschnitte 42. Die filterseitigen Rampenabschnitte 106 und die Aufnahmeöffnung 98 bilden insgesamt einen filterseitigen Verbindungsteil 108 der Verbindungseinrichtung 22. Die Dichtungsfläche 93 der Innendichtung 92 ist axial gegenüber dem filterseitigen Verbindungsteil 108 zu dem Filterelement 70 hin versetzt.

An der dem Innenraum des Filtertopfs 64 abgewandten Außenseite des Filterdeckels 66 sind drei Rastfederelemente 110 angeordnet. Die Rastfederelemente 110 sind Teile der Verriegelungseinrichtung 52. Die Rastfederelemente 110 verfügen jeweils über einen Halteabschnitt 112. Der Halteabschnitt 112 ist radial zwischen der Ringnut 100 und der Aufnahmeöffnung 98 einstückig mit dem Filterdeckel 66 verbunden. Ein jeweiliger Federarmabschnitt 114 der Rastfederelemente 110 ist einstückig mit dem Halteabschnitt 112 verbunden. Die Federarmabschnitte 114 befinden sich in Schließdrehrichtung 43 betrachtet jeweils an der Vorderseite der Halteabschnitte 112. Die Federarmabschnitte 114 erstrecken sich umfangsmäßig jeweils über einen Umfangswinkel von etwa 30°. Die Federarmabschnitte 114 können an den Halteabschnitten 112 in radialer Richtung federnd nach außen gebogen werden. An ihren den Halteabschnitten 112 jeweils abgewandten freien Ende gehen die Federarmabschnitte 114 jeweils in eine Rastnase 116 über. Die Rastnasen 116 erstrecken sich nach radial innen: Die Rastnase 116 befinden sich jeweils an der gleichen Umfangsseite wie ein Anfang 111 einer der filterseitigen Rastabschnitte 106 und ein Ende des jeweils vorherigen filterseitigen Rampenabschnitts 106.

Der Deckelblechring 102 weist ein mehrfach gebogenes Profil auf. Mit seiner radial äußeren Umfangsseite ist er mittels einer Bördelverbindung 120 fest mit einem freien Rand des Filtertopfs 64 verbunden. Bei der Bördelverbindung 120 handelt es sich um einen Formbördel. Der Deckelblechring 102 dient als Befestigungsring des Filterdeckels 66 mit dem Filtertopf 64. Radial innerhalb der Bördelverbindung 120 weist der Deckelblechring 102 einen etwa rechtwinkligen, umfangsmäßig geschlossen verlaufenden erste Biegeabschnitt auf. Im Bereich des ersten Biegeabschnitts bildet der Deckelblechring 102 auf seiner dem Filterdeckel 66 zugewandten Seite einen Kragen 122, der in die Ringnut 100 des Filterdeckels 66 eingreift.

Auf der dem Filterdeckel 66 abgewandten Außenseite des Deckelblechrings 102 realisiert der Kragen 122 eine Aufnahmenut 124 für den Außendichtabschnitt 58 des Filterkopfs 12.

Die radial innere Umfangsseite des Deckelblechrihgs 102 ist zu einem U-förmigen Profil gebogen, dessen Öffnung nach radial außen zeigt. Das U-förmige Profil beinhaltet eine koaxiale, umfangsmäßig geschlossen verlaufende Dichtungsnut 126. In der Dichtungsnut 126 ist eine Außendichtung 128 angeordnet. Die Dichtungsnut 126 ist also eine Dichtungsaufnahmenut. Die Außendichtung 128 steht axial zu dem Filterkopf 12 hin gegenüber einem umlaufenden Flächenabschnitt 129 vor. Der Flächenabschnitt 129 bildet den Boden der Ringnut 100 der Flächenabschnitt 129 erstreckt sich radial und umfangsmäßig. Der Flächenabschnitt 129 folgt an der dem Filterkopf 12 zugewandten Seite des Filterdeckels 66 radial nach außen auf die Außendichtung 128. Die Außendichtung 128 ist unterhalb der dem Filterkopf 12 zugewandten Seite der der Bördelverbindung 120 angeordnet. Die Außendichtung 128 ist eine O-Ring-Dichtung. Die Außendichtung 128 ist bzgl. der Filterachse 26 nach radial außen orientiert. Die Außendichtung 128 wirkt in radialer Richtung.

An seinem dem Filterdeckel 66 axial abgewandten Innenrand weist der Deckelblechring 102 umfangmäßig verteilt eine Mehrzahl von Einkerbungen 130 auf.

Bei montiertem Wechselfilter 14 liegt die Außendichtung 128 dicht an der Außendichtfläche 60 des Außendichtabschnitts 58 an. Die Außendichtung 128 trennt die Rohseite des Filterelements 70, respektive den Einlassringraum 30, von der Umgebung 132.

Zum Verbinden mit dem Filterkopf 12 wird der Wechselfilter 14 mit dem Filterdeckel 66 voran axial zu einer Verbindungsachse, welche im Ausführungsbeispiel mit der Filterachse 26 zusammenfällt, in einer Steckbewegung zunächst zu dem kopfseitigen Verbindungsteil 20 des Filterkopfs 12 hin bewegt. Der Außenzylinderabschnitt 34 wird in die Aufnahmeöffnung 98 des Filterdeckels 66 eingesteckt, bis die filterseitigen Rampenabschnitte 106 axial an den Einführrampenflächen 44 der kopfseitigen Rampenabschnitte 42 anstoßen. Der Außendichtabschnitt 58 befindet sich axial entfernt von der Außendichtung 128.

Mit einer Drehbewegung des Wechselzylinders14 in Schließdrehrichtung 43 wird der filterseitige Verbindungsteil 108 in den kopfseitigen Verbindungsteil 20 eingeschraubt. Dabei greifen die filterseitigen Rampenabschnitte 106 jeweils in eine der Rampennuten 48 ein. Nach einem Drehwinkel von 60° vom Beginn des Eintauchens der filterseitigen Rampenabschnitte 106 in die Rampennuten 48 beginnt die Außendichtung 128 an der Außendichtfläche 60 des Außendichtabschnitts 58 anzuliegen und wird beim Weiterdrehen des Wechselfilters 14 in dem querschnittserweiterten Eingangsbereich geführt.

Nach einer weiteren Drehung um 60° stoßen die in Schließdrehrichtung 43 vorderen Enden der filterseitigen Rampenabschnitte 160 an den hinteren Enden der Rampennuten 48 an. Die Enden der Rampennuten 48 bilden Anschläge, mit denen im Schließzustand der Verbindungseinrichtung 22 ein Weiterdrehen des Wechselfilters 14 verhindert wird.

Im Schließzustand der Verbindungseinrichtung 22 liegt die Innendichtung 92 dicht und in axialer Richtung zusammengepresst an der Dichtfläche 32 des Anschlusshülsenabschnitts 28 an.

In einer Endphase der Schließbewegung stoßen ferner die Rastnasen 116 der Federarmabschnitte 114 der Rastfederelemente 110 jeweils an die in Schließdrehrichtung 43 hinteren Enden der Führungsflächen 54 der Rastelemente 50 an. Bei dem Weiterdrehen des Wechselfilters 14 in Schließdrehrichtung 43 werden die Rastnasen 116 an den Führungsflächen 54 geführt. Im Schließzustand der Verbindungseinrichtung 22 rasten die Rastnasen 116 jeweils in die Rastvertiefungen 56 der Rastelemente 50 ein. Beim Einrasten der Rastnasen 116 wird ein wahrnehmbares Geräusch erzeugt.

Die eingerasteten Rastnasen 116 erschweren das Öffnen der Verbindungseinrichtung 22 durch Drehen des Wechselzylinders 14 entgegen der Schließdrehrichtung 43. Ferner erschwert die komprimierte Innendichtung 92 aufgrund der Reibung das Öffnen der Verbindungseinrichtung 22.

Das Entfernen des Wechselfilters 14 von dem Filterkopf 12 erfolgt durch Drehen des Wechselfilters 14 entgegen der Schließdrehrichtung 43. Dabei muss zunächst die Federkraft der Federabschnitte 114 und die Reibungskraft zwischen der Innendichtung 92 und der Dichtfläche 32 überwunden werden.

Beim Betrieb des Filtersystems 10 wird zu filtrierendes Motoröl durch den Einlass 16 des Filterkopfs 12 dem Einlassringraum 30 zugeführt. Von dort aus gelangt das Motoröl durch die Einlasskanäle 104 in den rohseitigen Ringraum 82 des Wechselfilters 14. Das zu filtrierende Motoröl durchströmt das Filtermedium 72 von radial außen nach radial innen und wird gereinigt. Das gereinigte Motoröl verlässt den Elementinnenraum 78 durch die Auslassöffnung 86 und gelangt in den Innenraum des Anschlusshülsenabschnitts 28, der als Fluidstutzen mit einem Ölkanal dient. Der Innenraum des Anschlusshülsenabschnitts 28 kommuniziert also fluidtechnisch mit der Auslassöffnung 86. Von dort aus strömt das gereinigte Motoröl in den Auslass 18 des Filterkopfs 12 und verlässt das Filtersystem 10.

Bei einer alternativen Bauform der Filtervorrichtung können am Filterkopf 20 und im Speziellen an dem Ringscheibenabschnitt 36 des Anschlusshülsenabschnitts 28 Einlasskanäle vorgesehen sein, so dass das Rohfluid alternativ oder ergänzend zu dem Einlass über die Einlasskanäle 104 durch die kopfseitigen Einlasskanäle in den Filter strömen kann.

## Patentansprüche

1. Spin-On Filter (14) für eine Filtervorrichtung (10) für Fluid, insbesondere Flüssigkeit, insbesondere Öl oder Kraftstoff, insbesondere einer Brennkraftmaschine, insbesondere eines Kraftfahrzeugs,
wobei der Spin-On Filter (14) aufweist:
- einen Gehäusetopf (64), in welchem ein Filterelement (70) angeordnet ist,
- einen stirnseitig an dem Gehäusetopf (64) angeordneten Anschlusskörper (66), welcher mit einer mittigen Zentralöffnung (98) und insbesondere mit wenigstens einer gegenüber der Zentralöffnung (98) nach radial außen versetzten Fluidöffnung (104) versehen ist,
- ein filterseitiges Verbindungsteil (108) einer Verbindungseinrichtung (22) zum lösbaren Verbinden des Spin-On Filters (14) mit einem Filterkopf (12) der Filtervorrichtung (10), welches an der mittigen Zentralöffnung (98) angeordnet ist,
und wobei das filterseitige Verbindungsteil (108) mittels einer kombinierten Steck-und Drehbewegung bzgl. einer Verbindungsachse (26) mit einem Anschlussstutzen eines kopfseitigen Verbindungsteils (20) des Filterkopfs (12) der Filtervorrichtung (10) lösbar verbindbar ist,
und wobei stirnseitig eine zumindest um die Zentralöffnung (98) und ggf. die wenigstens eine Fluidöffnung (104) umlaufende Außendichtung (128) vorgesehen ist, die zur Anlage einer filterkopfseitigen, radial nach innen gerichteten Dichtfläche (60) radial nach außen gerichtet ist, um bei an dem Filterkopf (12) montierten Spin-On Filter (14) einen zwischen dem Spin-On Filter (14) und dem Filterkopf (12) gebildeten Fluidraum (30) zur Umgebung hin abzudichten,
wobei eine radial nach außen offene Dichtungsaufnahmenut (126) zumindest teilweise durch einen Befestigungsring (102) des Anschlusskörpers (66) gebildet wird, der mit dem Rand des Gehäusetopfs (64) formschlüssig, insbesondere durch einen Formbördel (120), verbunden ist.

2. Spin-On Filter nach Anspruch 1, **dadurch gekennzeichnet, dass** die Außendichtung (128) axial zu dem Filterkopf (12) hin gegenüber einem umlaufenden Flächenabschnitt (129) vorsteht, der an der dem Filterkopf (12) zugewandten Seite des Anschlusskörpers (66) radial nach außen auf die Außendichtung (128) folgt.

3. Spin-On Filter nach einem der vorigen Ansprüche, **dadurch gekennzeichnet, dass** die Außendichtung (128) unterhalb der dem Filterkopf (12) zugewandten Seite der formschlüssigen Verbindung zwischen dem Rand des Gehäusetopfs (64) und dem Befestigungsring (102), insbesondere des Formbördels (120), angeordnet ist.

4. Spin-On Filter nach einem der vorigen Ansprüche, **dadurch gekennzeichnet, dass** das filterseitige Verbindungsteil (108) mehrere Verbindungsstege (106) aufweist, die in Umfangsrichtung der Verbindungsachse (26) verteilt der Zentralöffnung (98) angeordnet sind.

5. Spin-On Filter nach einem der vorigen Ansprüche, **dadurch gekennzeichnet, dass** die Verbindungseinrichtung (22) wenigstens eine bzgl. der Verbindungsachse (26) umfangsmäßige Innendichtung (92) aufweist.

6. Spin-On Filter nach Anspruch 5, **dadurch gekennzeichnet, dass** die Innendichtung (92) bzgl. der Verbindungsachse (26) axial gegenüber dem filterseitigen Verbindungsteil (108) zum Innenraum des Spin-On Filters (14) hin versetzt angeordnet ist.

7. Filtervorrichtung (10) für Fluid, insbesondere Flüssigkeit, insbesondere ÖI oder Kraftstoff, insbesondere einer Brennkraftmaschine, insbesondere eines Kraftfahrzeugs,
die einen Spin-On Filter (14) nach einem der vorigen Ansprüche und einen Filterkopf (12) umfasst.

8. Filtervorrichtung nach Anspruch 7, **dadurch gekennzeichnet, dass** die wenigstens eine Außendichtung (128) bzgl. der Verbindungsachse (96) ausschließlich in radialer Richtung abdichtet.

9. Filtervorrichtung nach einem der Ansprüche 7 oder 8 , **dadurch gekennzeichnet, dass** die wenigstens eine Außendichtung (128) auf der Seite des Wechselfilters (14) befestigt ist.

10. Filtervorrichtung nach einem der Ansprüche 7 bis 9, **dadurch gekennzeichnet, dass** die Dichtfläche (60) an einem entsprechenden Außendichtabschnitt (58) auf Seiten des Filterkopfs (12) angeordnet ist.

11. Filtervorrichtung nach einem der Ansprüche 7 bis 10, **dadurch gekennzeichnet, dass** wenigstens ein erster der Verbindungsteile (20) wenigstens zwei bzgl. der Verbindungsachse (26) schraubenartig verlaufende erste Rampenabschnitte (42) aufweist und der zweite Verbindungsteil (108) wenigstens zwei bzgl. der Verbindungsachse (26) schraubenartig verlaufende zweite Rampenabschnitte (106) aufweist, die wenigstens zum Schließen der Verbindungseinrichtung (22) aneinander geführt sind.

12. Filtervorrichtung nach einem der Ansprüche 7 bis 11, **dadurch gekennzeichnet, dass** die Verbindungseinrichtung (22) wenigstens eine Verriegelungseinrichtung (52) aufweist mit wenigstens einem kopfseitigen Verriegelungsteil (50) und wenigstens einen filterseitigen Verriegelungsteil (110), die in der Schließposition der Verbindungseinrichtung (42) miteinander eine entriegelbare Verbindung eingehen können.

13. Filtervorrichtung nach einem der Ansprüche 7 bis 12, **dadurch gekennzeichnet, dass** die Verbindungseinrichtung (22) wenigstens eine bzgl. der Verbindungsachse (26) umfangsmäßige Innendichtung (92) aufweist, welche zwischen dem Filterkopf (12) und dem Wechselfilter (14) wenigstens axial bzgl. der Verbindungsachse (26) abdichten und eine Rohseite (82) des Wechselfilters (14) von einer Reinseite (78) trennen kann.

14. Filtervorrichtung nach einem der Ansprüche 7 bis 13, **dadurch gekennzeichnet, dass** ein Verlauf von Rampenabschnitten (42, 106) der Verbindungsteile (20, 108) so an eine Anordnung der wenigstens einen Außendichtung (128) angepasst ist, dass die wenigstens eine Außendichtung (128) beim Schließen der Verbindungseinrichtung (42) mittels einer kombinierten Steck-und Drehbewegung während einer frühen Schließphase, insbesondere in der sich zweite Rampenabschnitte (106) in einem jeweiligen Anfangsbereich von Rampennuten (48) von ersten Rampenabschnitten (42) des ersten Verbindungsteils (20) befinden, sich axial außerhalb eines von zwei Dichtabschnitten (58, 126), insbesondere eines zylindrischen Außendichtabschnitts (58), befindet, zwischen denen sie in der Schließposition der Verbindungseinrichtung (22) in radialer Richtung abdichtet, und während einer späteren Schließphase, in der die zweiten Rampenabschnitte (106) insbesondere in einem jeweiligen Endbereich der Rampennuten (48) eingreifen, zwischen den beiden Dichtabschnitten (58, 126) verpresst ist.

## Claims

1. Spin-on filter (14) for a filter apparatus (10) for fluid, in particular liquid, in particular oil or fuel, in particular of an internal combustion engine, in particular of a motor vehicle, wherein the spin-on filter (14) comprises:
- a housing pot (64) in which a filter element (70) is disposed,
- a connecting body (66) disposed frontally on the housing pot (64) and which is provided with a central opening (98) located in the center and in particular with at least one fluid opening (104) which is offset radially outwardly opposite the central opening (98),
- a filter-sided connecting part (108) of a connecting means (22) for releasably connecting the spin-on filter (14) to a filter head (12) of the filter apparatus (10) and which is disposed at the central opening (98) located in the center,
and wherein the filter-sided connecting part (108) is releasably connectable by means of a combined plug-in and rotational movement with respect to a connecting axis (26) to a connecting piece of a head-sided connecting part (20) of the filter head (12) of the filter apparatus (10),
and wherein an external gasket (128) is provided frontally at least around the central opening (98) and possibly around the at least one fluid opening (104), the external gasket being directed radially outwardly for contacting a filter-head-sided, radially inwardly directed sealing surface (60) in order to seal towards the surrounding a fluid space (30) formed between the spin-on filter (14) and the filter head (12) when the spin-on filter (14) is mounted on the filter head (12),
wherein a seal-receiving groove (126) open radially outwardly is formed at least partially by a fastening ring (102) of the connecting body (66) which is positively connected to the edge of the housing pot (64), in particular by a mold flange (120).

2. Spin-on filter according to claim 1, **characterized in that** the external gasket (128) projects axially with respect to the filter head (12) opposite a circumferential surface portion (129) which, on the side of the connecting body (66) facing the filter head (12), follows the external gasket (128) radially outwardly.

3. Spin-on filter according to one of the previous claims, **characterized in that** the external gasket (128) is disposed below the side of the positive connection facing the filter head (12) between the edge of the housing pot (64) and the fastening ring (102), in particular of the mold flange (120).

4. Spin-on filter according to one of the previous claims, **characterized in that** the filter-sided connecting part (108) features a plurality of connecting webs (106) which are disposed in a distributed manner in the circumferential direction of the connecting axis (26) of the central opening (98).

5. Spin-on filter according to one of the previous claims, **characterized in that** the connecting means (22) comprises at least one circumferential internal gasket (92) with respect to the connecting axis (26).

6. Spin-on filter according to claim 5, **characterized in that** the internal gasket (92), with respect to the connecting axis (26), is axially offset with respect to the interior space of the spin-on filter (14) opposite the filter-sided connecting part (108).

7. Filter apparatus (10) for fluid, in particular liquid, in particular oil or fuel, in particular of an internal combustion engine, in particular of a motor vehicle, comprising a spin-on filter (14) according to one of the previous claims and a filter head (12).

8. Filter apparatus according to claim 7, **characterized in that** the at least one external gasket (128) seals with respect to the connecting axis (96) exclusively in the radial direction.

9. Filter apparatus according to one of the claims 7 or 8, **characterized in that** the at least one external gasket (128) is attached on the side of the exchangeable filter (14).

10. Filter apparatus according to one of the claims 7 to 9, **characterized in that** the sealing surface (60) is disposed on a corresponding outer sealing portion (58) on the sides of the filter head (12).

11. Filter apparatus according to one of the claims 7 to 10, **characterized in that** at least a first of the connecting parts (20) features at least two first ramp portions (42) extending helicoidally with respect to the connecting axis (26) and that the second connecting part (108) features at least two second ramp portions (106) extending helicoidally with respect to the connecting axis (26), which are joined at least for closing the connecting means (22).

12. Filter apparatus according to one of the claims 7 to 11, **characterized in that** the connecting means (22) features at least one locking means (52) with at least one head-sided locking part (50) and at least one filter-sided locking part (110) which, in the closed position of the connecting means (42), can form an unlockable connection with each other.

13. Filter apparatus according to one of the claims 7 to 12, **characterized in that** the connecting means (22) features at least one circumferential internal gasket (92) with respect to the connecting axis (26), which can seal, at least axially with respect to the connecting axis (26), between the filter head (12) and the exchangeable filter (14) and separate a raw side (82) of the exchangeable filter (14) from a clean side (78).

14. Filter apparatus according to one of the claims 7 to 13, **characterized in that** a layout of ramp portions (42, 106) of the connecting parts (20, 108) is adapted to an arrangement of the at least one external gasket (128) in such a way that, when the connecting means (42) is closed by means of a combined plug-in and rotational movement during an early closing phase in particular in which second ramp portions (106) are located in a respective initial region of ramp grooves (48) of first ramp portions (42) of the first connecting part (20), the at least one external gasket (128) is located axially outside one of two sealing portions (58, 126), in particular a cylindrical outer sealing portion (58), between which it seals in the radial direction in the closed position of the connecting means (22) and is pressed between the two sealing portions (58, 126) during a later closing phase in which the second ramp portions (106) engage in particular in a respective end region of the ramp grooves (48).

## Revendications

1. Filtre à visser (14) pour un dispositif de filtration (10) pour des fluides, notamment pour des liquides, notamment pour de l'huile ou du carburant, notamment d'un moteur à combustion interne, notamment d'un véhicule automobile, le filtre à visser (14) présentant :
- un pot de boîtier (64) dans lequel est disposé un élément filtrant (70),
- un corps de raccordement (66) disposé sur la face frontale sur le pot de boîtier (64) et pourvu d'un orifice central situé au milieu (98) et notamment d'au moins un orifice de fluide (104) décalé en sens radial vers l'extérieur en face de l'orifice central (98),
- une pièce de raccordement (108) côté filtre d'un dispositif de raccordement (22) destinée à relier le filtre à visser (14) de manière amovible à une tête de filtre (12) du dispositif de filtration (10), la pièce de raccordement étant disposée sur l'orifice central situé au milieu (98),
et la pièce de raccordement (108) côté filtre pouvant être reliée de manière amovible, par un mouvement d'enfichage et de rotation combiné par rapport à un axe de liaison (26), à une tubulure de raccord d'une pièce de raccordement (20) côté tête de la tête de filtre (12) du dispositif de filtration (10),
et un joint extérieur (128) étant prévu sur la face frontale, ce joint entourant au moins l'orifice central (98) et le cas échéant un orifice de fluide (104), au moins au nombre d'un, et étant dirigé en sens radial vers l'extérieur pour établir un contact avec une surface d'étanchéité (60) côté tête de filtre orientée en sens radial vers l'intérieur, afin d'étancher vis-à-vis de l'environnement, sur le filtre à visser (14) monté sur la tête de filtre (12), un espace fluidique (30) formé entre le filtre à visser (14) et la tête de filtre (12),
une rainure de réception de joint (126) ouverte en sens radial vers l'extérieur étant formée, au moins partiellement, par une bague de fixation (102) du corps de raccordement (66), la bague étant reliée de manière crabotée au bord du pot de boîtier (64), notamment au moyen d'une bordure moulée (120).

2. Filtre à visser selon la revendication 1, **caractérisé en ce que** le joint extérieur (128) fait saillie, en sens axial par rapport à la tête de filtre (12), en face d'une section de surface circulaire (129) qui suit le joint extérieur (128) en sens radial vers l'extérieur du côté du corps de raccordement (66) orienté vers la tête de filtre (12).

3. Filtre à visser selon l'une des revendications précédentes, **caractérisé en ce que** le joint extérieur (128) est disposé en dessous du côté de la liaison par complémentarité de forme orienté vers la tête de filtre (12), entre le bord du pot de boîtier (64) et la bague de fixation (102), notamment de la bordure moulée (120).

4. Filtre à visser selon l'une des revendications précédentes, **caractérisé en ce que** la pièce de raccordement (108) côté filtre présente plusieurs nervures de liaison (106) qui sont disposées de manière répartie en sens circonférentiel de l'axe de jonction (26) de l'orifice central (98).

5. Filtre à visser selon l'une des revendications précédentes, **caractérisé en ce que** le dispositif de raccordement (22) comporte au moins un joint intérieur (92) périphérique par rapport à l'axe de jonction (26).

6. Filtre à visser selon la revendication 5, **caractérisé en ce que** le joint intérieur (92), par rapport à l'axe de jonction (26), est décalé en sens axial par rapport à l'espace intérieur du filtre à visser (14) en face de la pièce de raccordement (108) côté filtre.

7. Dispositif de filtration (10) pour des fluides, notamment pour des liquides, notamment pour de l'huile ou du carburant, notamment d'un moteur à combustion interne, notamment d'un véhicule automobile, qui comprend un filtre à visser (14) selon l'une des revendications précédentes et une tête de filtre (12).

8. Dispositif de filtration selon la revendication 7, **caractérisé en ce que** le joint extérieur (128), au moins au nombre d'un, étanche exclusivement en sens radial par rapport à l'axe de jonction (96).

9. Dispositif de filtration selon l'une des revendications 7 ou 8, **caractérisé en ce que** le joint extérieur (128), au moins au nombre d'un, est fixé du côté du filtre interchangeable (14).

10. Dispositif de filtration selon l'une des revendications 7 à 9, **caractérisé en ce que** la surface d'étanchéité (60) est disposée sur une section d'étanchéité extérieure (58) correspondante du côté de la tête de filtre (12).

11. Dispositif de filtration selon l'une des revendications 7 à 10, **caractérisé en ce qu'**au moins une première pièce des pièces de raccordement (20) présente au moins deux premiers tronçons de rampe (42) s'étendant de manière hélicoïdale par rapport à l'axe de jonction (26) et que la seconde pièce de raccordement (108) présente au moins deux seconds tronçons de rampe (106) s'étendant de manière hélicoïdale par rapport à l'axe de jonction (26) qui sont réunis au moins pour fermer le dispositif de raccordement (22).

12. Dispositif de filtration selon l'une des revendications 7 à 11, **caractérisé en ce que** le dispositif de raccordement (22) présente au moins un dispositif de verrouillage (52) avec au moins un élément de verrouillage (50) côté tête et au moins un élément de verrouillage (110) côté filtre qui peuvent former ensemble un assemblage déverrouillable en position fermée du dispositif de jonction (42).

13. Dispositif de filtration selon l'une des revendications 7 à 12, **caractérisé en ce que** le dispositif de raccordement (22) présente au moins un joint intérieur (92) périphérique par rapport à l'axe de jonction (26) qui peut étancher, au moins en sens axial par rapport à l'axe de jonction (26), entre la tête de filtre (12) et le filtre interchangeable (14) et séparer un côté brut (82) du filtre interchangeable (14) d'un côté pur (78).

14. Dispositif de filtration selon l'une des revendications 7 à 13, **caractérisé en ce qu'**une suite de tronçons de rampe (42, 106) des pièces de raccordement (20, 108) est adaptée à un agencement du joint extérieur (128), au moins au nombre d'un, de manière à ce que, lors de la fermeture du dispositif de raccordement (42) par un mouvement d'enfichage et de rotation combiné à un stade de fermeture précoce notamment dans lequel se trouvent des seconds tronçons de rampe (106) dans une zone initiale respective de rainures de rampe (48) de premiers tronçons de rampe (42) du premier élément de jonction (20), le joint extérieur (128), au moins au nombre d'un, se situe en sens axial en dehors d'une de deux sections d'étanchéité (58, 126), notamment d'une section d'étanchéité extérieure cylindrique (58), que ce joint extérieur étanche en sens radial, entre ces sections d'étanchéité, en position fermée du dispositif de raccordement (22) et est pressé entre les deux sections d'étanchéité (58, 126) à un stade de fermeture ultérieur durant lequel les seconds tronçons de rampe (106) se mettent en prise notamment avec une zone finale respective des rainures de rampe (48).
